# EUROPEAN PATENT APPLICATION

(11) **EP 4 391 410 A1**
(43) Date of publication of application: **26.06.2024**
(21) Application number: 22858480.1
(22) Date of filing: 17.08.2022
(51) Int. Cl.: H04B 7/08, H04W 16/28, H04W 72/0446, H04W 72/20

(54) **TERMINAL, WIRELESS COMMUNICATION METHOD, AND BASE STATION**

(30) Priority: 19.08.2021 JP 2021134360
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/031027
(87) International publication number: WO 2023/022162

(57) **Abstract**

A terminal according to an aspect of the present disclosure includes: a receiving section configured to receive downlink control information indicating a trigger state associated with two channel state information (CSI)-reference signal (RS) resource sets; and a control section configured to determine one or more quasi-co-location (QCL) assumptions applied to the two CSI-RSs when a time offset between the downlink control information and at least one of two CSI-RSs based on the trigger state is smaller than a threshold. According to an aspect of the present disclosure, resources for group-based beam measurement/reporting can be used appropriately.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low delay, and the like (Non Patent Literature 1). In addition, for the purpose of further increasing capacity and advancement of LTE (third generation partnership project (3GPP) release (Rel.) 8 and 9), the specifications of LTE-Advanced (3GPP Rel. 10 to 14) have been drafted.

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In Rel. 15 and 16 NR, a UE in which group-based beam reporting is enabled can report only two different beam indices for each report setting. For this reason, in a future radio communication system, beam management-related extensions of a user terminal (User Equipment (UE)) having a plurality of panels (multi-panels), a plurality of transmission/reception points (multiple transmission/reception points (TRP)), and the like have been studied.

However, how to configure/determine the quasi-co-location (QCL) assumption when making beam management-related extensions has not yet been studied. If this is not clarified, communication quality/communication throughput may decrease.

Therefore, an object of the present disclosure is to provide a terminal, a radio communication method, and a base station that appropriately use resources for group-based beam measurement/reporting.

### Solution to Problem

A terminal according to an aspect of the present disclosure includes: a receiving section configured to receive downlink control information indicating a trigger state associated with two channel state information (CSI)-reference signal (RS) resource sets; and a control section configured to determine one or more quasi-co-location (QCL) assumptions applied to the two CSI-RSs when a time offset between the downlink control information and at least one of two CSI-RSs based on the trigger state is smaller than a threshold.

### Advantageous Effects of Invention

According to an aspect of the present disclosure, resources for group-based beam measurement/reporting can be used appropriately.

### Brief Description of Drawings

Fig. 1 is a diagram illustrating an example of RRC information elements related to CSI resource configuration.
Fig. 2 is a diagram illustrating an example of a beam usage environment assumed for multiple group-based beam reporting.
Fig. 3 is a diagram illustrating an example of a scheduling offset of two AP-CSI-RSs.
Fig. 4 is a diagram illustrating an example of two AP-CSI-RS resources according to Aspect 1-1.
Figs. 5A and 5B are diagrams illustrating an example of a QCL assumption according to single-DCI-based multi-TRP of Aspect 1-2.
Fig. 6 is a diagram illustrating another example of the QCL assumption according to single-DCI-based multi-TRP of Aspect 1-2.
Figs. 7A and 7B are diagrams illustrating an example of a QCL assumption according to multi-DCI-based multi-TRP of Aspect 1-2.
Fig. 8 is a diagram illustrating another example of the QCL assumption according to multi-DCI-based multi-TRP of Aspect 1-2.
Figs. 9A and 9B are diagrams illustrating an example of a QCL assumption according to a second embodiment.
Fig. 10 is a diagram illustrating another example of the QCL assumption according to the second embodiment.
Figs. 11A and 11B are diagrams illustrating an example of a QCL assumption according to a third embodiment.
Fig. 12 is a diagram illustrating another example of the QCL assumption according to the third embodiment.
Fig. 13 is a diagram illustrating an example of a schematic configuration of a radio communication system according to one embodiment.
Fig. 14 is a diagram illustrating an example of a configuration of a base station according to one embodiment.
Fig. 15 is a diagram illustrating an example of a configuration of a user terminal according to one embodiment.
Fig. 16 is a diagram illustrating an example of a hardware configuration of the base station and the user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and encoding) of at least one of a signal and a channel (expressed as a signal/channel) in UE on the basis of a transmission configuration indication state (TCI state).

The TCI state may represent what is applied to a downlink signal/channel. Those corresponding to the TCI state applied to an uplink signal/channel may be expressed as a spatial relation.

The TCI state is information regarding a quasi-co-location (QCL) of the signal/channel, and may also be referred to as, for example, a spatial reception parameter, spatial relation information, or the like. The TCI state may be configured in the UE for each channel or each signal.

The QCL is an indicator indicating a statistical property of a signal/channel. For example, when one signal/channel and another signal/channel have a QCL relation, this may mean that it is possible to assume that at least one of Doppler shift, Doppler spread, an average delay, a delay spread, and a spatial parameter (for example, a spatial reception parameter (spatial Rx parameter)) is identical (in QCL with respect to at least one of these) between the plurality of different signals/channels.

Note that the spatial reception parameter may correspond to a reception beam of the UE (for example, a reception analog beam), and the beam may be specified on the basis of spatial QCL. The QCL (or at least one element of the QCL) in the present disclosure may be replaced with spatial QCL (sQCL).

A plurality of types of QCL (QCL types) may be defined. For example, four QCL types A to D with different parameters (or parameter sets) that can be assumed to be identical may be provided, ad these parameters (which may be referred to as QCL parameters) are as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial reception parameter.

It may be referred to as a QCL assumption for the UE to assume that a given control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel on the basis of a TCI state of the signal/channel or the QCL assumption.

The TCI state may be, for example, information regarding the QCL of a target channel (in other words, a reference signal (RS) for the channel) and another signal (for example, another RS). The TCI state may be configured (indicated) by higher layer signaling, physical layer signaling, or a combination thereof.

The physical layer signaling may be, for example, downlink control information (DCI).

A channel for which a TCI state or spatial relation is configured (specified) may be, for example, at least one of a downlink shared channel (physical downlink shared channel (PDSCH)), a downlink control channel (physical downlink control channel (PDCCH)), an uplink shared channel (physical uplink shared channel (PUSCH)), or an uplink control channel (physical uplink control channel (PUCCH)).

In addition, an RS having a QCL relation with the channel may be, for example, at least one of a synchronization signal block (SSB), a channel state information reference signal (CSI-RS), a sounding reference signal (SRS), a tracking CSI-RS (also referred to as a tracking reference signal (TRS)), and a QCL detection reference signal (also referred to as a QRS).

The SSB is a signal block including at least one of a primary synchronization signal (PSS), a secondary synchronization signal (SSS), and a physical broadcast channel (PBCH). The SSB may be referred to as an SS/PBCH block.

An RS of QCL type X in a TCI state may mean an RS in a QCL type X relation with (DMRS of) a given channel/signal, and this RS may be referred to as a QCL source of QCL type X in the TCI state.

### (Default TCI State/Default Spatial Relation/Default PL-RS)

In Rel. 16, the PDSCH may be scheduled in DCI having a TCI field. The TCI state for the PDSCH is indicated by the TCI field. The TCI field in DCI format 1-1 is three bits and the TCI field in DCI format 1-2 is up to three bits.

In the RRC connection mode, if a first in-DCI TCI information element (higher layer parameter tci-PresentInDCI) is set to "enabled" for a CORESET for scheduling a PDSCH, the UE assumes that a TCI field exists in DCI format 1_1 of a PDCCH transmitted in the CORESET.

In addition, if a second in-DCI TCI information element (higher layer parameter tci-PresentInDCI-1-2) for the CORESET for scheduling the PDSCH is configured for the UE, the UE assumes that a TCI field with a DCI field size indicated by the second in-DCI TCI information element exists in DCI format 1_2 of the PDSCH transmitted in the CORESET.

In addition, in Rel. 16, the PDSCH may be scheduled with DCI having no TCI field. The DCI format of the DCI may be DCI format 1_0 or DCI format 1_1/1_2 in a case where the in-DCI TCI information element (higher layer parameter tci-PresentInDCI or tci-PresentInDCI-1-2) is not configured (enabled). If the PDSCH is scheduled with DCI having no TCI field and if the time offset between the reception of DL DCI (DCI for scheduling the PDSCH (scheduling DCI)) and the corresponding PDSCH (PDSCH scheduled with the DCI) is greater than or equal to a threshold (timeDurationForQCL), the UE assumes that the TCI state or QCL assumption for the PDSCH is the same as the TCI state or QCL assumption (default TCI state) for the CORESET (for example, scheduling DCI).

In an RRC connection mode, both in a case where in-DCI TCI information element (higher layer parameter tci-PresentInDCI and tci-PresentInDCI-1-2) is set to "enabled" and in a case where no in-DCI TCI information element is configured, if the time offset between the reception of DL DCI (DCI that schedules a PDSCH) and the corresponding PDSCH (the PDSCH scheduled by the DCI) is smaller than a threshold (timeDurationForQCL) (application condition: a first condition), in the case of non-cross-carrier scheduling, the TCI state (a default TCI state) of the PDSCH may be the TCI state of the lowest CORESET ID in the newest slot in an active DL BWP of the CC (of a specific UL signal). Otherwise, the TCI state of the PDSCH (default TCI state) may be a TCI state of the lowest TCI state ID of the PDSCH in the active DL BWP for the scheduled CC.

In Rel. 15, individual MAC CEs of an MAC CE for activation/deactivation of a PUCCH spatial relation and an MAC CE for activation/deactivation of an SRS spatial relation are needed. The PUSCH spatial relation conforms to the SRS spatial relation.

In Rel. 16, at least one of an MAC CE for activation/deactivation of a PUCCH spatial relation and an MAC CE for activation/deactivation of an SRS spatial relation may not be used.

When, in FR2, neither a spatial relation nor a PL-RS for a PUCCH is configured (application condition: a second condition), default assumptions of the spatial relation and the PL-RS (a default spatial relation and a default PL-RS) are applied to the PUCCH. When, in FR2, neither a spatial relation nor a PL-RS for an SRS (an SRS resource for an SRS, or an SRS resource corresponding to an SRI in DCI format 0_1 that schedules a PUSCH) is configured (application condition: the second condition), default assumptions of the spatial relation and the PL-RS (a default spatial relation and a default PL-RS) are applied to the PUSCH scheduled by DCI format 0_1 and the SRS.

When a CORESET is configured in the active DL BWP on the CC (application condition), the default spatial relation and the default PL-RS may be in a TCI state or QCL assumption of a CORESET having the lowest CORESET ID in the active DL BWP. When a CORESET is not configured in the active DL BWP on the CC, the default spatial relation and the default PL-RS may be in an active TCI state having the lowest ID of the PDSCH in the active DL BWP.

In Rel. 15, the spatial relation of a PUSCH scheduled by DCI format 0_0 conforms to the spatial relation of the PUCCH resource having the lowest PUCCH resource ID among active spatial relations of PUCCHs on the same CC. Even when no PUCCHs are transmitted on SCells, the network needs to update the PUCCH spatial relations on all SCells.

In Rel. 16, a PUCCH configuration for a PUSCH scheduled by DCI format 0_0 is not needed. When, for a PUSCH scheduled by DCI format 0_0, there is no active PUCCH spatial relation or no PUCCH resource on an active UL BWP in the CC (application condition: the second condition), a default spatial relation and a default PL-RS are applied to the PUSCH.

The application condition of the default spatial relationship/default PL-RS for the SRS may include that the default beam path-loss enabling information element for the SRS (higher layer parameter enableDefaultBeamPlForSRS) is set to be enabled. The application condition of the default spatial relationship/default PL-RS for the PUCCH may include that the default beam path-loss enabling information element for the PUCCH (higher layer parameter enableDefaultBeamPlForPUCCH) is set to be enabled. The application condition of the default spatial relationship/default PL-RS for the PUSCH scheduled by DCI format 0_0 may include that the default beam path-loss enabling information element (higher layer parameter enableDefaultBeamPlForPUSCH0_0) for the PUSCH scheduled by DCI format 0_0 is set to be enabled.

The above-mentioned threshold may be referred to as QCL time duration "timeDurationForQCL", "threshold", "threshold for offset between a DCI indicating a TCI state and PDSCH scheduled by the DCI", "threshold-Sched-Offset", a schedule offset threshold, a scheduling offset threshold, or the like.

If the offset between the reception of DL DCI and the corresponding PDSCH is smaller than the threshold timeDurationForQCL, and the at least one TCI state configured for the serving cell of the scheduled PDSCH includes "QCL type D", and the UE is configured with two default TCI enabling information elements (enableTwoDefaultTCIStates-r16), and the at least one TCI codepoint (codepoint of the TCI field in the DL DCI) indicates two TCI states, the UE assumes that the DMRS port of the PDSCH or PDSCH transmission occasion of the serving cell is quasi-co-located with RS for QCL parameters associated with two TCI states corresponding to the lowest one of the TCI codepoints including two different TCI states (two default QCL assumption determination rules). The two default TCI enabling information elements indicate that Rel. 16 operation of two default TCI states for PDSCH is enabled when at least one TCI codepoint is mapped to two TCI states.

### (Multi-TRPs)

In NR, studies are underway to allow one or more transmission/reception points (TRPs) (multi-TRPs (MTRPs)) to perform DL transmission to the UE by using one or more panels (multi-panels). In addition, studies are underway to allow the UE to perform UL transmission to one or more TRPs by using one or more panels.

Note that the plurality of TRPs may correspond to the same cell identifier (ID), or may correspond to different cell IDs. The cell ID may be a physical cell ID or a virtual cell ID.

The multi-TRPs (for example, TRPs #1 and #2) are connected by an ideal/non-ideal backhaul, and information, data, and the like may be exchanged. A different codeword (CW) and a different layer may be transmitted from each TRP of the multi-TRPs. Non-coherent joint transmission (NCJT) may be used as one form of multi-TRP transmission.

In the NCJT, for example, TRP #1 performs modulation mapping and layer mapping on a first codeword, uses first precoding in a first number of layers (for example, two layers), and transmits a first PDSCH. In addition, TRP #2 performs modulation mapping and layer mapping on a second codeword, uses second precoding in a second number of layers (for example, two layers), and transmits a second PDSCH.

Note that a plurality of PDSCHs (multi-PDSCHs) subjected to the NCJT may be defined as partially or completely overlapping regarding at least one of time domain or frequency domain. That is, the first PDSCH from a first TRP and the second PDSCH from a second TRP may overlap in at least one of time resource or frequency resource.

The first PDSCH and the second PDSCH may be assumed not to be in quasi-co-location (QCL) relation (not quasi-co-located). Reception of the multi-PDSCHs may be replaced with simultaneous reception of PDSCHs that are not of a given QCL type (for example, QCL type D).

A plurality of PDSCHs (which may be referred to as multiple PDSCHs) from the multi-TRPs may be scheduled by using one piece of DCI (single DCI, single PDCCH) (single master mode, single-DCI-based multi-TRPs). A plurality of PDSCHs from the multi-TRPs may be scheduled by using a plurality of DCI (multi-DCI or multiple PDCCHs) (multi-master mode, multi-DCI-based multi-TRPs).

In ultra-reliable and low latency communications (URLLC) for multi-TRPs, it has been studied to support PDSCH (transport block (TB) or codeword (CW)) repetition across multi-TRPs. It has been studied to support a repetition scheme (URLLC scheme, reliability enhancement scheme, for example, Schemes 1a, 2a, 2b, 3, 4) across multi-TRPs on a frequency domain, a layer (spatial) domain, or a time domain. In Scheme 1a, multi-PDSCHs from multi-TRPs are subjected to space division multiplexing (SDM). In Schemes 2a and 2b, PDSCHs from multi-TRPs are subjected to frequency division multiplexing (FDM). In Scheme 2a, the redundancy version (RV) is the same for multi-TRPs. In Scheme 2b, the RV may be the same or different for multi-TRPs. In Schemes 3 and 4, multi-PDSCHs from multi-TRPs are subjected to time division multiplexing (TDM). In Scheme 3, multi-PDSCHs from multi-TRPs are transmitted in one slot. In Scheme 4, multi-PDSCHs from multi-TRPs are transmitted in different slots.

Such a multi-TRP scenario can perform more flexible transmission control using a high-quality channel.

In RRC configuration information for linking a plurality of pairs of PDCCHs and PDSCHs having a plurality of TRPs, one control resource set (CORESET) in PDCCH configuration information (PDCCH-Config) may correspond to one TRP, to support intra-cell (having the same cell ID) and inter-cell (having different cell IDs) multi-TRP transmission based on the plurality of PDCCHs.

When at least one of the conditions 1 and 2 described below is satisfied, the UE may judge that it is multi-DCI-based multi-TRPs. In this case, the TRP may be replaced with a CORESET pool index.

### [Condition 1]

A CORESET pool index of 1 is configured.

### [Condition 2]

Two different values (for example, 0 and 1) of the CORESET pool index are configured.

When the condition described below is satisfied, the UE may judge that it is single-DCI-based multi-TRPs. In this case, the two TRPs may be replaced with two TCI states indicated by the MAC CE/DCI.

### [Condition]

In order to indicate one or two TCI states for one codepoint in the TCI field in the DCI, an "enhanced TCI states activation/deactivation for UE-specific PDSCH MAC CE" is used.

The DCI for the common beam indication may be a UE-specific DCI format (for example, DL DCI format (for example, 1_1 and 1_2) or UL DCI format (for example, 0_1 and 0_2)) or a UE-group common DCI format.

### (CSI)

In NR, a UE measures a channel state by using a reference signal (or a resource for the reference signal) and feedbacks (reports) channel state information (CSI) to a network (for example, a base station).

The UE may measure the channel state using at least one of a channel state information reference signal (CSI-RS), a synchronization signal/physical broadcast channel (SS/PBCH) block, a synchronization signal (SS), a demodulation reference signal (DMRS), and the like.

A CSI-RS resource may include at least one of a non zero power (NZP) CSI-RS resource, a zero power (ZP) CSI-RS resource, and a CSI interference measurement (CSI-IM) resource.

A resource for measuring a signal component for CSI may be referred to as a signal measurement resource (SMR) or a channel measurement resource (CMR). The SMR (CMR) may include, for example, an NZP CSI-RS resource for channel measurement, an SSB, and the like.

A resource for measuring an interference component for CSI may be referred to as an interference measurement resource (IMR). The IMR may include, for example, at least one of the NZP CSI-RS resource for interference measurement, an SSB, a ZP CSI-RS resource, and a CSI-IM resource.

The SS/PBCH block is a block including a synchronization signal (for example, primary synchronization signal (PSS) and secondary synchronization signal (SSS)) and a PBCH (and the corresponding DMRS), which may be referred to an SS block (SSB) or the like.

Note that, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), reference signal received power in layer 1 (L1-RSRP), L1-reference signal received quality (L1-RSRQ), an L1-signal to interference plus noise ratio (L1-SINR), an L1-signal to noise ratio (L1-SNR), and the like.

The CSI may include a plurality of parts. A CSI part 1 may include information with a relatively small number of bits (for example, the RI). A CSI part 2 may include information with a relatively large number of bits (for example, the CQI) such as information determined on the basis of the CSI part 1.

In addition, the CSI may also be classified into several CSI types. The type and size of information to be reported may be different depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be specified. The usage of the CSI type is not limited to those.

As a method for feedbacking the CSI, periodic CSI (P-CSI) reporting, aperiodic CSI (A-CSI) reporting, semi-persistent CSI (SP-CSI) reporting and the like are under study.

The UE may be notified of CSI measurement configuration information using higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), other system information (OSI), or the like.

The physical layer signaling may be, for example, downlink control information (DCI).

The CSI measurement configuration information may be configured using, for example, the RRC information element "CSI-MeasConfig". The CSI measurement configuration information may include CSI resource configuration information (RRC information element "CSI-ResourceConfig"), CSI report configuration information (RRC information element "CSI-ReportConfig"), and the like. The CSI resource configuration information is related to a resource for CSI measurement, and the CSI report configuration information is related to how the UE performs CSI reporting.

The CSI report configuration information ("CSI-ReportConfig") includes channel measurement resource information ("resourcesForChannelMeasurement"). In addition, the CSI report configuration information may include resource information for interference measurement (for example, NZP CSI-RS resource information for interference measurement ("nzp-CSI-RS-ResourcesForInterference"), CSI-IM resource information for interference measurement ("csi-IM-ResourcesForInterference"), and the like. These resource information correspond to CSI resource configuration information IDs (Identifiers) ("CSI-ResourceConfigId") .

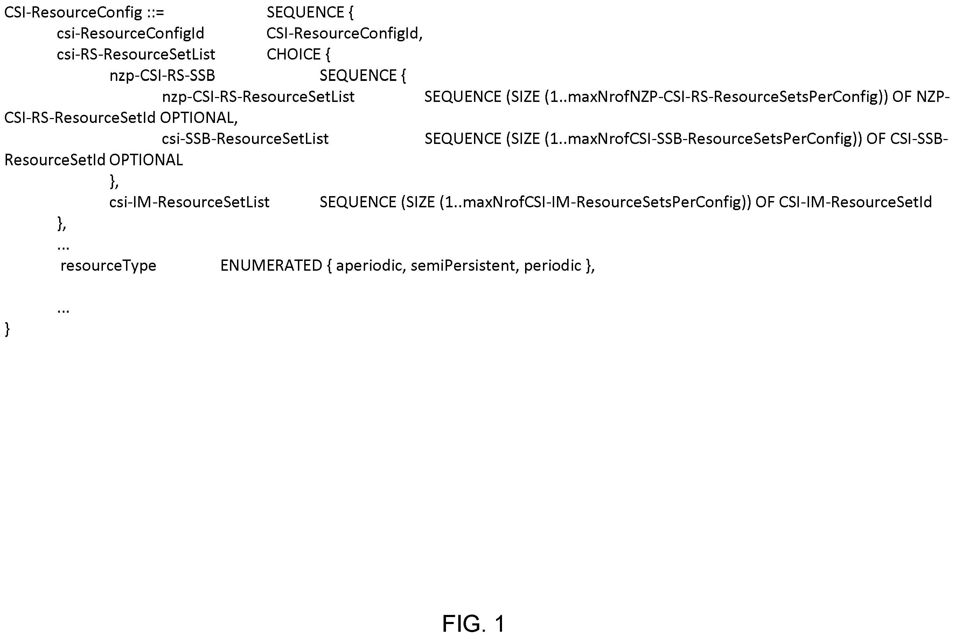

Fig. 1 is a diagram illustrating an example of RRC information elements related to CSI resource configuration. In this example, an excerpt of a field (which may be referred to as a parameter) included in an information element is illustrated. This figure is described using Abstract Syntax Notation One (ASN.1) notation. Note that, drawings relating to other RRC information elements (or RRC parameters) of the present disclosure are also described in the similar notation.

Note that, the CSI resource configuration information IDs (which may be referred to as CSI resource configuration IDs) corresponding to respective resource information may have the same value in one or more IDs or may respectively have different values.

As illustrated in Fig. 1, the CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of NZP CSI-RS and SSB information ("nzp-CSI-RS-SSB") for measurement and CSI-IM resource set list information ("csi-IM-ResourceSetList").

The resource type represents a behavior of a time domain of the resource configuration, and "aperiodic", "semi-persistent", and "periodic" can be configured. For example, corresponding CSI-RSs may be referred to as an A-CSI-RS, an SP-CSI-RS, and a P-CSI-RS.

Note that, a resource for channel measurement may be used for calculation of, for example, the CQI, PMI, L1-RSRP, and the like. In addition, a resource for interference measurement may be used for calculation of the L1-SINR, L1-SNR, L1-RSRQ, and other indicators regarding interference.

When the interference measurement is performed with CSI-IM, each CSI-RS for channel measurement may be associated with the CSI-IM resource in terms of resources, on the basis of the order of the CSI-RS resource and the CSI-IM resource in the corresponding resource set.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). These list information correspond to one or more NZP CSI-RS resource set IDs ("NZP-CSI-RS-ResourceSetId") and CSI-SSB resource set IDs ("CSI-SSB-ResourceSetId"), and may be used for specifying a resource as a measurement target.

When the resource type (resourceType) is aperiodic, the NZP CSI-RS resource set list information includes IDs of resource sets up to the maximum number of NZP CSI-RS resource sets per configuration (maxNrofNZP-CSI-RS-ResourceSetsPerConfig = 16). Otherwise, the NZP CSI-RS resource set list information includes an ID of one resource set.

The SSB resource set list information for CSI measurement includes IDs of resource sets of the maximum number of CSI-SSB resource sets per configuration (maxNrofCSI-SSB-ResourceSetsPerConfig = 1).

When the resource type (resourceType) is aperiodic, the CSI-IM resource set list information includes IDs of resource sets up to the maximum number of CSI-IM resource sets per configuration (maxNrofCSI-IM-ResourceSetsPerConfig = 16). Otherwise, the CSI-IM resource set list information includes an ID of one resource set.

For the CMR based on the NZP-CSI-RS for L1-RSRP, the number of resource sets in the periodic and semi-persistent CSI resource settings is one. For the CMR based on the NZP-CSI-RS for L1-RSRP, the number of resource sets in the aperiodic CSI resource setting is up to 16. Here, each resource set has up to 64 resources. The total number of different CSI-RS resources across all resource sets is up to 128.

For the CMR based on the NZP-CSI-RS for L1-SINR, the number of resource sets in the periodic and semi-persistent CSI resource settings is one. For the CMR based on the NZP-CSI-RS for L1-SINR, the number of resource sets in the aperiodic CSI resource setting is up to 16. Here, all resource sets have up to 64 CSI-RS resources or up to 64 SS/PBCH block resources.

Only one aperiodic CSI-RS resource set from the resource settings is associated with one trigger state in the CSI aperiodic trigger state list (CSI-AperiodicTriggerStateList).

For group-based beam reporting, it is been studied to configure two CMR resource sets for two TRPs for each periodic/semi-persistent CMR resource setting.

The NZP CSI-RS resource set information ("NZP-CSI-RS-ResourceSet") includes the NZP CSI-RS resource set ID and one or more NZP CSI-RS resource IDs ("NZP-CSI-RS-ResourceId").

The NZP CSI-RS resource information ("NZP-CSI-RS-Resource") may include the NZP CSI-RS resource ID and an ID ("TCI-stateId") of a transmission configuration indication state (TCI state). The TCI state will be described later.

The CSI-SSB resource set information ("CSI-SSB-ResourceSet") includes the CSI-SSB resource set ID and one or more SSB index information ("SSB-Index"). The SSB index information is, for example, an integer of 0 or more and 63 or less, and may be used for identifying the SSB in an SS burst.

The TCI state is information regarding quasi-co-location (QCL) of a channel or a signal, and may also be referred to as a spatial reception parameter, spatial relation info, or the like. The TCI state may be configured or specified for the UE per channel or per signal.

The TCI state information ("TCI-State") may include a TCI state ID and one or more QCL information ("QCL-Info"). The QCL information may include at least one of information regarding a reference signal of a QCL source (RS-related information ("referenceSignal")) and information indicating a QCL type (QCL type information ("qcl-Type")). The RS-related information may include information such as an index of an RS (for example, NZP CSI-RS resource ID, SSB index), an index of a serving cell, and an index of a bandwidth part (BWP) in which the RS is located.

The UE may control reception processing (for example, at least one of reception, demapping, demodulation, decoding, reception beam determination, and the like), transmission processing (for example, at least one of transmission, mapping, modulation, encoding, transmission beam determination, and the like), and the like, on the basis of the TCI state corresponding to the TCI state ID associated with at least one of the signal and the channel (expressed as signal/channel).

Note that in the present disclosure, "A/B" may indicate "at least one of A and B".

For the P-CSI-RS, an associated TCI state may be configured by the RRC. Note that, for the P-CSI-RS, the SP-CSI-RS, and the A-CSI-RS, the related TCI state may be determined on the basis of higher layer signaling, physical layer signaling, or a combination thereof.

### (Aperiodic CSI Reporting/Aperiodic CSI)

If a scheduling offset between a last symbol of a PDCCH carrying triggering DCI and a first symbol of an AP CSI-RS resource in an NZP CSI-RS resource set configured without tracking RS information (higher layer parameter trs-Info) is any of the following cases 1 to 3 (Condition #1), the following conditions #1-A and #1-B are followed:
[[Case 1]]
   When the threshold beamSwitchTiming reported by the UE is one of the values of {14, 28, 48}, and no beam switch timing enabling information element (enableBeamSwitchTiming) is provided, the scheduling offset is less than the threshold beamSwitchTiming.
[[Case 2]]
   If the UE provides/reports a beam switch timing information element (capability, beamSwitchTiming-r16) and a beam switch timing enabling information element (enableBeamSwitchTiming) is provided and the NZP CSI-RS resource set is configured with a repetition information element (higher layer parameter repetition) set to 'off' or without a repetition information element, the scheduling offset is smaller than 48.
[[Case 3]]
   When a beam switch timing enabling information element (enableBeamSwitchTiming) is provided and the NZP CSI-RS resource set is configured with a repetition information element (higher layer parameter repetition) set to 'on', the scheduling offset is smaller than the beam switch timing information element (capability, beamSwitchTiming-r16) reported by the UE.

In the present disclosure, the threshold, beamSwitchTiming, 48, beamSwitchTiming-r16, the value reported by the UE, and the capability information may be replaced with each other.

### [Condition #1-A]

The UE is configured with a default TCI state enabling information element per CORESET pool index (enableDefaultTCIStatePerCoresetPoolIndex) and the UE is configured with a PDCCH configuration (higher layer parameter PDCCH-Config) including two different values of the CORESET pool index in the CORESET information element (ControlResourceSet) (case of multi-DCI-based multi-TRP).

When Condition #1-A is satisfied, if there is any other DL signal using the indicated TCI state in the same symbol as the CSI-RS (resources of the AP-CSI-RS/AP-CSI-RS), the UE applies the QCL assumption on the DL signal when receiving the AP CSI-RS. The DL signal is one of the following:
- A PDSCH scheduled by a PDCCH associated with the same CORESET pool index as the PDCCH triggering the AP CSI-RS and scheduled with an offset equal to or greater than the threshold timeDurationForQCL.
- An AP CSI-RS triggered by a PDCCH associated with the same CORESET pool index as a PDCCH triggering the AP CSI-RS and scheduled with an offset equal to or greater than beamSwitchTiming reported by the UE when the reporting value of beamSwitchTiming is one of the values {14, 28, 48} and enableBeamSwitchTiming is not provided.
- An AP CSI-RS triggered by a PDCCH associated with the same CORESET pool index as the PDCCH triggering the AP CSI-RS and scheduled with an offset greater than or equal to 48 when the reporting value for beamSwitchTiming-r16 is one of the values {224, 336} and enableBeamSwitchTiming is provided.
- P CSI-RS.
- SP CSI-RS.

When Condition #1-A is satisfied, and if there is no DL signal, the UE applies the QCL assumption used for the CORESET with the lowest CORESET ID (controlResourceSetId) among CORESETs configured with the same value of the CORESET pool index as the PDCCH triggering the AP CSI-RS, in the latest slot in which one or more CORESETs are associated with the same value of the CORESET pool index as the PDCCH triggering the AP CSI-RS, the CORESET being associated with the monitored search space, when receiving the AP CSI-RS.

### [Condition #1-B]

The UE is configured with two default TCI state enabling information elements (enableTwoDefaultTCIStates) and at least one TCI codepoint (codepoint of the TCI field) is mapped to two TCI states (case of single-DCI-based multi-TRP).

When Condition #1-B is satisfied, if there is any other DL signal with the indicated TCI state in the same symbol as the CSI-RS (the AP-CSI-RS/AP-CSI-RS resources), the UE applies the QCL assumption for the DL signal when receiving the AP CSI-RS. The DL signal is one of the following:
- PDSCH scheduled with an offset equal to or greater than the threshold timeDurationForQCL.
- an AP CSI-RS scheduled with an offset greater than or equal to beamSwitchTiming reported by the UE when the reporting value of beamSwitchTiming is one of the values {14, 28, 48} and enableBeamSwitchTiming is not provided.
- an AP CSI-RS scheduled with an offset greater than or equal to 48 when the reporting value of beamSwitchTiming-r16 is one of the values {224, 336} and enableBeamSwitchTiming is provided.
- P CSI-RS.
- SP CSI-RS.

If there is a PDSCH indicated with two TCI states in the same symbol as the CSI-RS (resources of the AP-CSI-RS/AP-CSI-RS), the UE applies the first TCI state of the two TCI states when receiving the AP CSI-RS.

When Condition #1-B is satisfied, if there is no DL signal, the UE applies the first TCI state of the two TCI states corresponding to the lowest TCI codepoint among the TCI codepoints mapped to the two TCI states and applicable to the PDSCH in the active BWPs of the cell in which the CSI-RS (resources of the AP-CSI-RS/AP-CSI-RS) is to be received when receiving the AP CSI-RS.

### (Beam Management)

In Rel. 15 NR, a beam management (BM) method has been studied. In the beam management, it has been studied to perform beam selection based on the L1-RSRP reported by the UE. Changing (switching) a beam of a signal/channel may be equivalent to changing at least one of a TCI state or a QCL assumption of the signal/channel.

The UE may report (transmit) a measurement result for beam management using an uplink control channel (physical uplink control channel (PUCCH)) or an uplink shared channel (physical uplink shared channel (PUSCH)). The measurement result may be, for example, CSI including at least one of the L1-RSRP, L1-RSRQ, L1-SINR, L1-SNR, and the like.

A measurement result (for example, CSI) reported for beam management may be referred to as beam measurement, beam measurement report, beam reporting (beam report), beam report CSI, or the like.

The CSI measurement for the beam report may include interference measurement. The UE may measure channel quality, interference, and the like using a resource for CSI measurement, and derive the beam report.

The beam report may include a result of at least one of channel quality measurement and interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

The CSI report configuration information may include a "report quantity" (which may be represented by an RRC parameter "reportQuantity") that is information of a parameter to be reported in one report instance (for example, one CSI). The report quantity is defined by the type of the ASN.1 object "choice". Therefore, one of the parameters (cri-RSRP, ssb-Index-RSRP, and the like) defined as the report quantity is configured.

The UE in which the higher layer parameter (for example, the RRC parameter "groupBasedBeamReporting" for group-based beam reporting) included in the CSI report configuration information is disabled may include, for each report setting, beam measurement resource IDs (for example, SSBRI, CRI) having different numbers of higher layer parameters (for example, the RRC parameter "nrofReportedRS" indicating the number of reported RSs) included in the CSI report configuration information and measurement results (for example, L1-RSRP) corresponding to the respective IDs in the beam report (one report instance).

The UE in which groupBasedBeamReporting is enabled may include, for each report setting, two different beam measurement resource IDs and two measurement results (for example, L1-RSRP) corresponding to the respective IDs in the beam report. In other words, the UE in which groupBasedBeamReporting is enabled divides the DL-RS (for example, CSI-RS) into two groups, and reports the ID and the measurement value for the RS corresponding to the higher measurement result in each group. Note that the two beam measurement resources (CSI-RS resource, SSB resource) may be simultaneously received by the UE by using one spatial domain reception filter or may be simultaneously received by the UE by using a plurality of simultaneous spatial domain reception filters.

In addition, the NZP CSI-RS resource set information may include information regarding repetition in the resource in the resource set. The information regarding the repetition may indicate, for example, 'on' or 'off'. Note that 'on' may be expressed as 'enabled' or 'valid', and 'off' may be expressed as 'disabled' or `invalid' .

For example, for a resource set for which repetition is configured to be 'on', the UE may assume that a resource in the resource set has been transmitted using the same downlink spatial domain transmission filter. In this case, the UE may assume that the resource in the resource set has been transmitted using the same beam (for example, from the same base station using the same beam).

For a resource set for which repetition is configured to be `off', the UE may perform control such that the UE should not assume (or may not assume) assume that the resource in the resource set has been transmitted using the same downlink spatial domain transmission filter. In this case, the UE may assume that the resource in the resource set is not transmitted using the same beam (transmitted using a different beam). In other words, the UE can assume that the base station performs beam sweeping for a resource set for which repetition is set to "off".

In Rel. 15 NR, cri-RSRP and ssb-Index-RSRP of the report quantities are related to beam management. The UE in which the cri-RSRP is configured as the report quantity reports the CRI and the L1-RSRP corresponding to the CRI. The UE in which the ssb-Index-RSRP is configured as the report quantity reports the SSBRI and the L1-RSRP corresponding to the SSBRI.

The CSI report can include one or more sets of CRI/SSBRI and RSRP. The number of these sets may be set by a higher layer parameter (for example, the RRC parameter "nrofReportedRS") indicating the number of reference signal resources to be reported.

For L1-RSRP reporting, when nrofReportedRS is set to 1 (a value is `n1'), RSRP #1, which is a field of a given number of bits (for example, m bits) indicating L1-RSRP of the largest measurement value, is included in the CSI report. In Rel. 15 NR, m = 7.

For L1-RSRP reporting, when nrofReportedRS is configured to be larger than 1, or groupBasedBeamReporting is enabled, the UE uses differential L1-RSRP-based reporting. Specifically, the UE includes, in the same CSI report (reporting instance), RSRP #1 indicating the L1-RSRP having the largest measurement value and a differential RSRP #k calculated (for example, as a difference from the measurement value,) with reference to the largest measurement value for the L1-RSRP having the k-th largest (for example, k = 2, 3, and 4) measurement value. Here, the differential RSRP #k may be a field of bits with the number (for example, n bits) smaller than the given number. In Rel. 15 NR, n = 4.

For example, for each group, seven bits of the absolute RSRP value for the first beam (range from-140 to -44 dBm using 1 dB step size) and four bits of the differential RSRP value for the second beam are reported.

Note that when groupBasedBeamReporting is enabled, the UE includes RSRP #1 and differential RSRP #2 in the same CSI report.

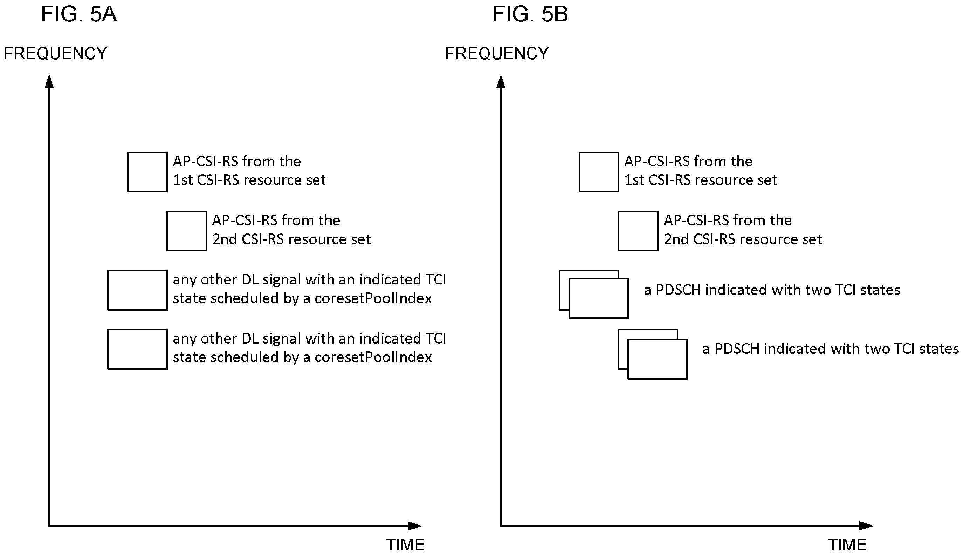

In the CSI report, the CRI/SSBRI #k in Fig. 5 is a field indicating the CRI/SSBRI corresponding to the RSRP #k or the differential RSRP #k (included in a case where the RSRP #k or the differential RSRP #k is reported).

Note that in NR Rel. 16 and beyond, nrofReportedRS may be a value of 4 or more, or may be 4 or more. The CSI report may include four or more sets of CRI/SSBRI and RSRP. The above m and n are not limited to 7 and 4, respectively.

In addition, in NR Rel. 16 and beyond, the L1-SINR reporting may be performed. For the L1-SINR reporting, contents obtained by replacing RSRP in the L1-RSRP reporting described above with SINR may be applied. Note that, in this case, the configuration/parameter for the SINR may be different from the configuration/parameter for the RSRP, and for example, the nrofReportedRS may be replaced with nrofReportedRSForSINR indicating the number of reference signal resources to be reported for the SINR.

### (Extended Group-Based Beam Reporting)

Beam management-related extensions (for example, which may be referred to as a beam report suitable for a plurality of TRPs, or an extended group-based beam reporting) of a user terminal (User Equipment (UE)) having a plurality of panels (multi-panels), a plurality of transmission/reception points (multiple transmission/reception points (TRP)), and the like have been studied for a future radio communication system (for example, Rel. 17 NR).

Since groupBasedBeamReporting described above can be reported in one report for two groups, it is suitable when multi-TRP transmission, multi-panel reception, or the like is applied. For example, the best beam of the TRP 1 (corresponding to the best/highest measurement result) as the RSRP #1 and the best beam of the TRP 2 as the differential RSRP #2 can be used for reporting.

As described above, in Rel. 15 and 16, the UE in which group-based beam reporting is enabled can report only two different CRIs/SSBRIs (which may be replaced with beam indices) for each report setting. Therefore, for Rel. 17, it has been studied to cause the number of groups that can be reported by the group-based beam reporting to be larger than 2. In addition, for more flexible reporting, a configuration capable of reporting two or more CRIs/SSBRIs in a group has also been studied.

Such group-based beam reporting using beam reporting (a beam report in which the number of groups for the report is greater than two or two or more CRIs/SSBRIs are reported in the group for the report) may be referred to as multiple group-based beams, extended group-based beam reporting, Rel. 17 group-based beam reporting, and the like (hereinafter, referred to as multiple group-based beam reporting).

For the situation of operating multiple group-based beam reporting, the following two modes are conceivable:
- Mode 1: The UE may simultaneously receive multiple beams that each belong to different groups; and
- Mode 2: The UE may simultaneously receive multiple beams that belong to a same group.

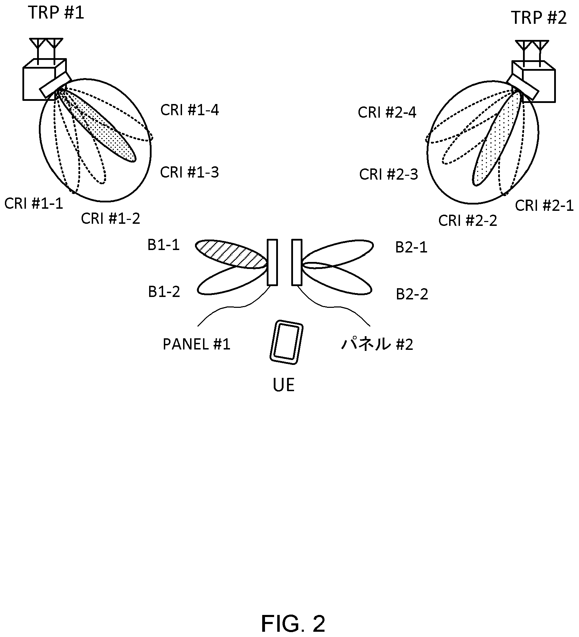

Hereinafter, a situation in which the multiple group-based beam reporting is operated will be described using the environment of Fig. 2 as an example. Fig. 2 is a diagram illustrating an example of a beam usage environment assumed for multiple group-based beam reporting.

In Fig. 2, the UE measures resources of reference signals (CSI-RS) transmitted from two TRPs (TRPs #1 and #2). The UE has two panels (panels #1 and #2), and each panel can form a different beam (B1-1, B1-2, B2-1, and B2-2).

TRP #1 transmits the CSI-RS using the resources of CRI #1-1 to CRI #1-4 corresponding to different beams, respectively. TRP #2 transmits the CSI-RS using the resources of CRI #2-1 to CRI #2-4 corresponding to different beams, respectively. In the present disclosure, the beams of CRI #1-1 to CRI #1-4 may be replaced with transmission beams #1 to #4, respectively. In the present disclosure, the beams of CRI #2-1 to CRI #2-4 may be replaced with transmission beams #5 to #8, respectively.

Note that each TRP and UE may perform transmission and reception by sweeping each beam (using different times/frequencies), or may perform transmission and reception by simultaneously using several beams.

Note that Fig. 2 is an example, and for example, TRPs #1 and #2 may be replaced with two panels (panels #1 and #2) of a given TRP.

The RSRP/SINRs corresponding to CRI #1-1 to CRI #1-4 may be denoted as RSRP/SINR #1-1 to RSRP/SINR #1-4, respectively. The RSRP/SINRs corresponding to CRI #2-1 to CRI #2-4 may be denoted as RSRP/SINR #2-1 to RSRP/SINR #2-4, respectively.

In addition, hereinafter, a resource corresponding to a given CRI may be simply referred to as a given CRI (for example, CRI #1-1 may mean CRI #1-1, or may mean a resource corresponding to CRI #1-1) .

In the present disclosure, it is assumed that one resource configuration (which may be referred to as a reference signal (RS) configuration) corresponds to (is associated with) one TRP. A resource configuration corresponding to one TRP may correspond to, for example, at least one of CSI resource configuration information ("CSI-ResourceConfig"), a CSI-RS resource set list, an NZP CSI-RS resource set, and a CSI-SSB resource set.

For example, in Fig. 2, RRC configuration may be performed as follows. The CSI report configuration #0 configured for the UE includes CSI resource configurations #0 and #1. CSI resource configuration #0 is related to resource set #0 (CSI-RS resource set #0), and four CSI-RS resources corresponding to CRI #1-1 to CRI #1-4 are configured in resource set #0. CSI resource configuration #1 is related to resource set #1 (CSI-RS resource set #1), and four CSI-RS resources corresponding to CRI #2-1 to CRI #2-4 are configured in resource set #1.

Note that, even in a case where one resource configuration corresponds to (is associated with) a plurality of TRPs, the contents of the present disclosure may be applied.

For example, the UE selects two beams from TRP #1 to be measured by using panel #1, and selects two beams from TRP #2 to be measured by using panel #2. Note that, in this example, the UE assumes that panel #1 is related to group #1 and panel #2 is related to group #2.

For example, the UE selects, for each group, a beam from one TRP to be measured using panel #1 and a beam from the other TRP to be measured using panel #2.

One of the above mode 1 and mode 2 may be supported by the UE, or both may be supported.

The beam measurement/reporting may be according to at least one of the following options 1 to 3. This beam measurement/reporting may be used for inter-TRP beam pairing. Here, option 1 corresponds to mode 1, and option 2 corresponds to mode 2.

### [Option 1]

In CSI reporting, the UE may report N (N > 1) pairs/groups and M (M >= 1) beams per pair/group. Different beams in different pairs/groups may be received simultaneously.

### [Option 2]

In CSI reporting, the UE may report N (N >= 1) pairs/groups and M (M > 1) beams per pair/group. Different beams in one pair/group may be received simultaneously.

### [Option 3]

The UE may report M (M >= 1) beams in N (N > 1) CSI reporting corresponding to N (N > 1) reporting settings. Different beams corresponding to different CSI reporting may be received simultaneously.

### (Analysis)

It has been studied that, if the foregoing option 2 aperiodic (AP) reporting of beam reporting is associated with aperiodic resource settings, an existing RRC parameter, CSI-related report configuration information (CSI-AssociatedReportConfigInfo), is configured with two CMR resource sets (two CMR sets), and each CMR resource set may be configured with corresponding QCL information. It has been studied that when the aperiodic reporting is associated with periodic (P)/semi-persistent (SP) resource settings, the resource setting includes two CMR resource sets.

In this case, in AP reporting for group-based beam reporting, two CMR resource sets are configured for one trigger state. It is not clear how to make a QCL assumption (default QCL assumption) when the scheduling offset is smaller than a threshold when the DCI triggers AP reporting for group-based beam reporting for two CMR resource sets.

If such a QCL assumption is not clear, there is a possibility of causing a decrease in communication quality/throughput.

Therefore, the present inventors have conceived a method for determining a QCL assumption.

Hereinafter, embodiments according to the present disclosure will be described in detail with reference to the drawings. The radio communication methods according to the embodiments may be applied alone or in combination.

In the present disclosure, "A/B/C" and "at least one of A, B and C" may be replaced with each other. In the present disclosure, the cell, the serving cell, the CC, the carrier, the BWP, the DL BWP, the UL BWP, the active DL BWP, the active UL BWP, and the band may be replaced with each other. In the present disclosure, the index, the ID, the indicator, the resource ID may be replaced with each other. In the present disclosure, the sequence, the list, the set, the group, the cohort, the cluster, the subset, and the like may be replaced with each other. In the present disclosure, support, control, controllable, operate, and operable may be replaced with each other.

In the present disclosure, configure, activate, update, indicate, enable, specify, and select may be replaced with each other.

In the present disclosure, the higher layer signaling may be any of, for example, radio resource control (RRC) signaling, medium access control (MAC) signaling, broadcast information, and the like, or a combination thereof. In the present disclosure, the RRC, the RRC signaling, the RRC parameter, the higher layer, the higher layer parameter, the RRC information element (IE), the RRC message, and the configuration may be replaced with each other.

For the MAC signaling, for example, a MAC control element (MAC CE), a MAC protocol data unit (PDU), or the like may be used. In the present disclosure, the MAC CE, the update command, and the activation/deactivation command may be replaced with each other.

The broadcast information may be, for example, a master information block (MIB), a system information block (SIB), remaining minimum system information (RMSI, SIB1), other system information (OSI), or the like.

In the present disclosure, the beam, the spatial domain filter, the spatial setting, the TCI state, the UL TCI state, the unified TCI state, the unified beam, the common TCI state, the common beam, the TCI assumption, the QCL assumption, the QCL parameter, the spatial domain reception filter, the UE spatial domain reception filter, the UE reception beam, the DL beam, the DL reception beam, the DL precoding, the DL precoder, the DL-RS, the QCL type D RS of the TCI state/QCL assumption, the QCL type A RS of the TCI state/QCL assumption, the spatial relation, the spatial domain transmission filter, the UE spatial domain transmission filter, the UE transmission beam, the UL beam, the UL transmission beam, the UL precoding, the UL precoder, and the PL-RS may be replaced with each other. In the present disclosure, the QCL type X-RS, the DL-RS associated with QCL type X, the DL-RS with QCL type X, a source of the DL-RS, the SSB, the CSI-RS, and the SRS may be replaced with each other.

In the present disclosure, the panel, the uplink (UL) transmission entity, the TRP, the spatial relation, the control resource set (CORESET), the PDSCH, the codeword, the base station, the antenna port (for example, a demodulation reference signal (DMRS) port) of a signal, the antenna port group (for example, a DMRS port group) of a signal, the group for multiplexing (for example, a code division multiplexing (CDM) group, a reference signal group, and a CORESET group), the CORESET pool, the CORESET subset, the CW, the redundancy version (RV), and the layer (multiinput muti-output (MIMO) layer, transmission layer, and spatial layer) may be replaced with each other. In addition, the panel identifier (ID) and the panel may be replaced with each other. In the present disclosure, the TRP ID and the TRP may be replaced with each other.

The panel may relate to at least one of the group index of the SSB/CSI-RS group, the group index of the group-based beam reporting, and the group index of the SSB/CSI-RS group for the group-based beam reporting.

In addition, the panel identifier (ID) and the panel may be replaced with each other. That is, the TRP ID and the TRP, the CORESET group ID and the CORESET group, and the like may be replaced with each other.

In the present disclosure, the TRP, the transmission point, the panel, the DMRS port group, the CORESET pool, and one of two TCI states associated with one codepoint of the TCI field may be replaced with each other.

In the present disclosure, the single PDCCH (DCI) may be assumed to be supported when multi-TRPs use ideal backhaul. The multi-PDCCHs (DCI) may be assumed to be supported when the multi-TRPs use non-ideal backhaul.

Note that the ideal backhaul may be referred to as a DMRS port group type 1, a reference signal related group type 1, an antenna port group type 1, a CORESET pool type 1, and the like. The non-ideal backhaul may be referred to as a DMRS port group type 2, a reference signal related group type 2, an antenna port group type 2, a CORESET pool type 2, and the like. The name is not limited thereto.

In the present disclosure, the single TRP, the single TRP system, the single TRP transmission, and the single PDSCH may be replaced with one another. In the present disclosure, the multi-TRPs, the multi-TRP system, the multi-TRP transmission, and the multi-PDSCHs may be replaced with each other. In the present disclosure, the single DCI, the single PDCCH, the single-DCI-based multi-TRPs, and that two TCI states on at least one TCI codepoint are activated may be replaced with each other.

In the present disclosure, the single TRP, the channel using a single TRP, the channel using one TCI state/spatial relation, that the multi-TRPs are not enabled by the RRC/DCI, that a plurality of TCI states/spatial relations is not enabled by the RRC/DCI, and that a CORESET pool index (CORESETPoolIndex) value of 1 is not configured for any CORESET and no codepoint in the TCI field is mapped to two TCI states may be replaced with each other.

In the present disclosure, the multi-TRPs, the channel using multi-TRPs, the channel using a plurality of TCI states/spatial relations, that the multi-TRPs are enabled by the RRC/DCI, that the plurality of TCI states/spatial relations is enabled by the RRC/DCI, and at least one of the single-DCI-based multi-TRPs and the multi-DCI-based multi-TRPs may be replaced with each other. In the present disclosure, the multi-DCI-based multi-TRPs and that a CORESET pool index (CORESETPoolIndex) value of 1 is configured for the CORESET may be replaced with each other. In the present disclosure, the single-DCI-based multi-TRPs and that at least one codepoint of the TCI field is mapped to two TCI states may be replaced with each other.

In the present disclosure, TRP #1 (first TRP) may correspond to CORESET pool index = 0, or may correspond to a first TCI state of two TCI states corresponding to one codepoint of the TCI field. TRP #2 (second TRP) TRP #1 (first TRP) may correspond to CORESET pool index = 1, or may correspond to a second TCI state of two TCI states corresponding to one codepoint of the TCI field.

In the present disclosure, the single DCI (sDCI), the single PDCCH, the single-DCI-based multi-TRP system, the sDCI-based MTRP, and that activating the two TCI states on at least one TCI codepoint may be replaced with one another.

In the present disclosure, the multi-DCI (mDCI), the multi-PDCCHs, the multi-DCI-based multi-TRP system, the mDCI-based MTRP, and that configuring two CORESET pool indices or CORESET pool index = 1 (or a value of 1 or more) may be replaced with each other.

The QCL of the present disclosure may be replaced with the QCL type D.

The "TCI state A is the same QCL type D as TCI state B", the "TCI state A is the same as TCI state B", the "TCI state A is TCI state B and QCL type D", and the like in the present disclosure may be replaced with each other.

In the present disclosure, the DMRS, the DMRS port, and the antenna port may be replaced with each other.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a tracking CSI-RS, a CSI-RS with TRS information (higher layer parameter trs-Info), an NZP CSI-RS resource in an NZP CSI-RS resource set with TRS information, an NZP-CSI-RS resource in an NZP-CSI-RS resource set including a plurality of NZP-CSI-RS resources of a same antenna port, and a TRS resource may be replaced with each other. In the present disclosure, a CSI-RS resource, a CSI-RS resource set, a CSI-RS resource group, and an information element (IE) may be replaced with each other.

In the present disclosure, the codepoint of the DCI field 'Transmission Configuration Indication', the TCI codepoint, the DCI codepoint, and the codepoint of the TCI field may be replaced with each other.

The panel identifier (ID) and the panel may be replaced with each other. The TRP ID and the TRP may be replaced with each other. In addition, the index and the ID may be replaced with each other.

Note that, in the present disclosure, a group may be replaced with a set, a cluster, a panel, a group related to (reported) beams, a pair, a set, a grouping, a TRP, or the like.

In the following embodiments, the beam index may be replaced with, for example, CRI/SSBRI. In addition, the RSRP/SINR may be replaced with an arbitrary beam-related measurement result.

In addition, the CSI-RS-related names may be replaced with a corresponding SSB related names. For example, a CSI-RS resource may be replaced with an SSB resource. In other words, a CSI-RS may be replaced with a CSI-RS/SSB, and a CRI may be replaced with a CRI/SSBRI.

In addition, in the present disclosure, the "reception panel" may correspond to at least one of an RS group, a TRP index, a CORESET pool index, an RS group configured for group-based beam reporting, a TCI state (or TCI) group, a QCL assumption (or QCL) group, and a beam group.

In addition, in the present disclosure, measurement/reporting of a group-based beam for multi-TRP transmission or multi-panel UE reception, beam reporting based on a plurality of groups, and multiple group-based beam reporting may be replaced with each other.

In addition, in the present disclosure, a resource setting, a CSI resource setting, and a CSI resource configuration (CSI-ResourceConfig) may be replaced with each other.

In addition, in the present disclosure, a reporting setting, a CSI reporting setting, and a CSI report configuration (CSI-ReportConfig) may be replaced with each other.

In addition, in the present disclosure, each and per may be replaced with each other.

In addition, in the present disclosure, levels, parameters, configurations, information elements, sets, groups, and associations may be replaced with each other.

In the present disclosure, a measurement result, RSRP, SINR, L1-RSRP, L1-RSRP, SS-RSRP, CSI-RSRP, SSS-SINR, and CSI-SINR may be replaced with each other.

At least one of beam measurement, beam reporting, and CSI reporting in each embodiment may be applied to at least one of a serving cell and a non-serving cell. For example, a plurality of groups/pairs may be respectively associated with a plurality of cells, and each cell may be a serving cell or a non-serving cell.

### (Radio Communication Method)

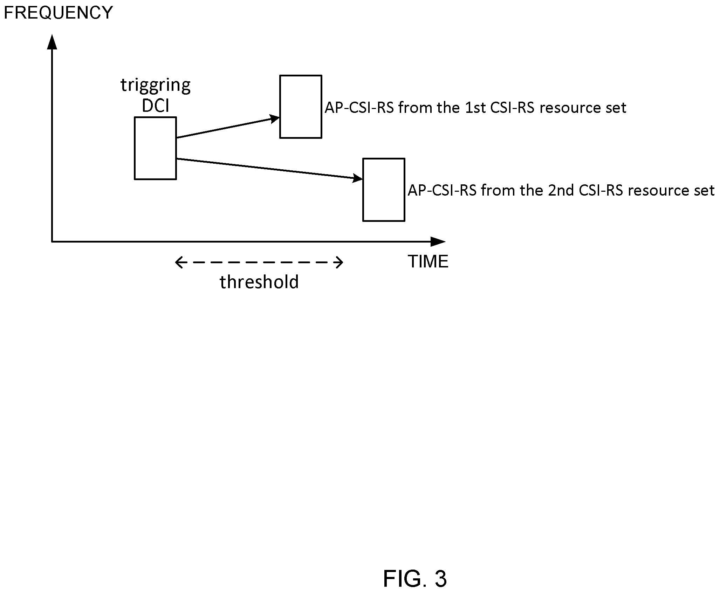

As illustrated in Fig. 3, for at least one of two AP-CSI-RSs (two AP-CSI-RS resources from two CSI-RS resource sets), when a scheduling offset between a last symbol of triggering DCI and a first symbol of an AP CSI-RS resource is greater than or equal to a threshold, the following embodiments may follow at least one of the following application conditions 1 and 2.

### [Application Condition 1]

Among the two AP-CSI-RSs, the following embodiments may be applied only to an AP-CSI-RS whose scheduling is smaller than a threshold.

### [Application Condition 2]

The following embodiments may be applied to two AP-CSI-RSs triggered by the same DCI.

### <First Embodiment>

This embodiment may be applied when Condition #1 is satisfied and the trigger state indicated by the triggering DCI is associated with two CSI-RS resource sets (for group-based beam reporting).

It may be provided that the UE does not assume to receive (two) AP CSI-RS resources from two CSI-RS resource sets (indicated by triggering DCI) in one or more symbols overlapping (where the two AP CSI-RS resources from the two CSI-RS resource sets overlap).

It may be provided that the UE does not assume to receive (two) AP CSI-RS resources from two CSI-RS resource sets (indicated by triggering DCI) with (RSs of) different QCL type D in one or more symbols overlapping (where the two AP CSI-RS resources from the two CSI-RS resource sets overlap).

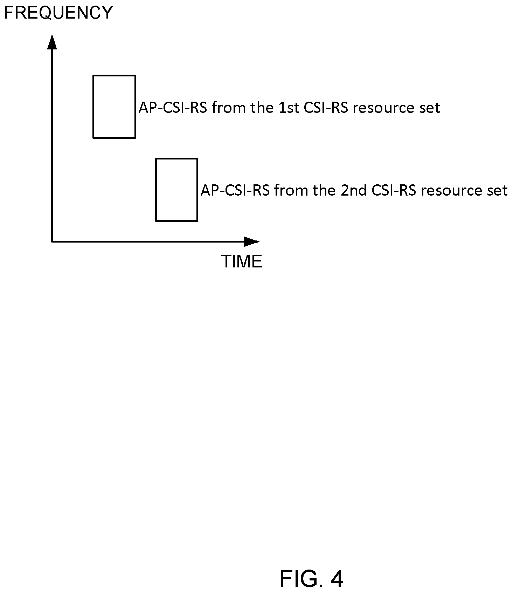

As illustrated in the example of Fig. 4, the symbols of the first AP-CSI-RS from the first CSI-RS resource set do not overlap the symbols of the second AP-CSI-RS from the second CSI-RS resource set.

### <Aspect 1-1>

An operation (rule) for at least one of foregoing Condition #1-A and Condition #1-B may be applied to each CSI-RS resource from each CSI-RS resource set.

### <Aspect 1-2>

A new operation (rule) may be applied to each CSI-RS resource from each CSI-RS resource set.

### [Case of Single-DCI-Based Multi-TRP]

If there is any other DL signal with the indicated TCI state ("any other DL signal" in Condition #1-B) in the same symbol as one AP-CSI-RS, the UE may apply the QCL assumption of the DL signal when receiving the (overlapping) AP-CSI-RS (Fig. 5A).

If there is a PDSCH indicated with two TCI states in the same symbol as the CSI-RS (resources of the AP-CSI-RS/AP-CSI-RS), the UE may apply one TCI state of the two TCI states when receiving the AP-CSI-RS according to the CSI-RS resource set/TRP associated with the TCI state. Here, the UE may apply the first TCI state to the AP-CSI-RS associated with the first CSI-RS resource set/TRP and apply the second TCI state to the AP-CSI-RS associated with the second CSI-RS resource set/TRP (Fig. 5B).

The TRPs associated with each AP-CSI-RS resource may be different. A different one may be selected from the two TCI states for the two AP-CSI-RSs.

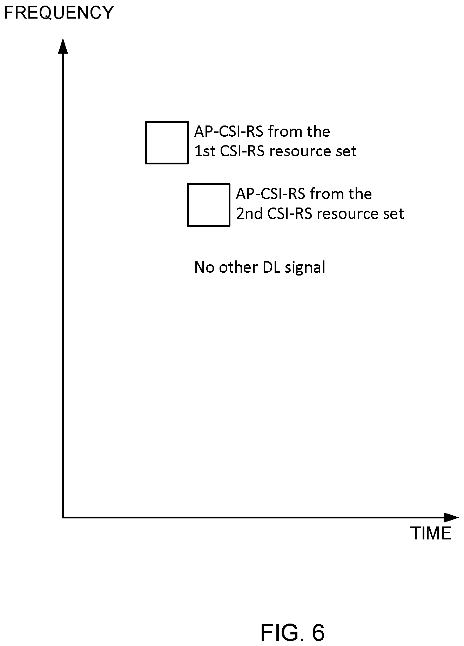

If there is no DL signal ("any other DL signal" in Condition #1-B), the UE may apply, according to the CSI-RS resource set/TRP associated with the TCI state, one TCI state of the two TCI states corresponding to the lowest TCI codepoint among the TCI codepoints mapped to the two TCI states and applicable to the PDSCH in the active BWPs of the cell in which the CSI-RS (resources of the AP-CSI-RS/AP-CSI-RS) is to be received, when the UE receives the AP CSI-RS. Here, the UE may apply the first TCI state to the AP-CSI-RS associated with the first CSI-RS resource set/TRP and apply the second TCI state to the AP-CSI-RS associated with the second CSI-RS resource set/TRP (Fig. 6).

The TRPs associated with each AP-CSI-RS resource may be different. A different one may be selected from the two TCI states for the two AP-CSI-RSs.

In a single-DCI-based multi-TRP, if there are two TCI states corresponding to one TCI codepoint, they may mean two TCI states for the two TRPs. If two AP-CSI-RS resource sets are configured, they may mean two CMR sets for two TRPs. A TCI state, a CSI-RS resource set, and a TRP may be associated. This association may be configured by explicit signaling or may be determined by implicit association.

### [Case of Multi-DCI-Based Multi-TRP]

If there is any other DL signal using the TCI state indicated (scheduled) with CORESET from one CORESET pool index in the same symbol as the CSI-RS (resources of the AP-CSI-RS/AP-CSI-RS), the UE may follow the following operations a1 or a2. The DL signal may be different from Condition #1-A described above. The DL signal (DL signal a) may be any of the following.
- A PDSCH scheduled by the PDCCH associated with the CORESET pool index and scheduled with an offset equal to or greater than the threshold timeDurationForQCL.
- An AP CSI-RS triggered by the PDCCH associated with the CORESET pool index and scheduled with an offset equal to or greater than beamSwitchTiming reported by the UE when the reporting value of beamSwitchTiming is one of the values {14, 28, 48} and enableBeamSwitchTiming is not provided.
- An AP CSI-RS triggered by the PDCCH associated with the CORESET pool index and scheduled with an offset greater than or equal to 48, when the reporting value for beamSwitchTiming-r16 is one of the values {224, 336} and enableBeamSwitchTiming is provided.
- P CSI-RS.
- SP CSI-RS.

### [Operation a1]

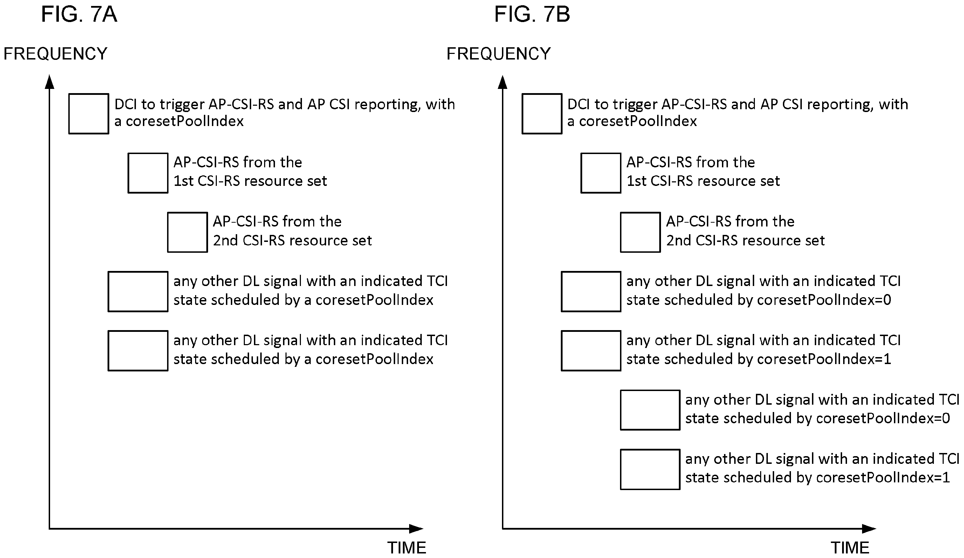

The UE applies the QCL assumption of the DL signal when receiving the AP-CSI-RS (Fig. 7A).

### [Operation a2]

Only if the CORESET pool index for the DL signal is associated with the CSI-RS resource set for the AP-CSI-RS resource, the DL signal is considered to be present. Only in this case, the UE may apply the QCL assumption of the DL signal when receiving the AP-CSI-RS. Otherwise, the UE may consider that there is no DL signal.

If there are any other (two) DL signals with TCI state indicated (scheduled) by (two) CORESETs from two CORESET pool indices in the same symbol as the CSI-RS (resources of the AP-CSI-RS/AP-CSI-RS) (the definition of the DL signal may be the same as that of the DL signal a described above), the UE may apply the QCL assumption of the DL signal scheduled/triggered by one CORESET from the CORESET pool index to the AP-CSI-RS from the CSI-RS resource set associated with the CORESET pool index when receiving the AP-CSI-RS, depending on the association of the CORESET pool index with the CSI-RS resource set (Fig. 7B).

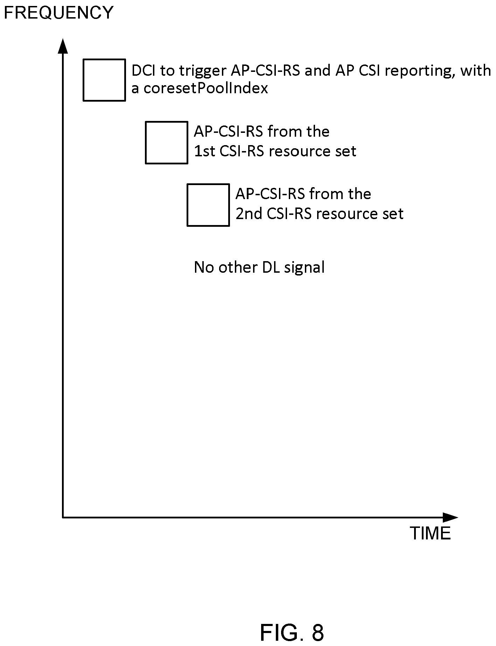

If there is no DL signal in the same symbol as the two CSI-RS resources, the UE may apply the QCL assumption used for the CORESET with the lowest CORESET ID (controlResourceSetId) with the CORESET pool index and associated with the monitored search space in the most recent slot for an AP-CSI-RS from the CSI-RS resource set associated with the value of the CORESET pool index, when receiving the AP CSI-RS (Fig. 8).

For two AP-CSI-RSs corresponding to (two CMR sets) triggered by one DCI of CORESET with a CORESET pool index (0 or 1) configured, a default QCL assumption corresponding to the value of the configured CORESET pool index may be applied for the first CMRs/AP-CSI-RS, and a default QCL assumption corresponding to the value of the unconfigured CORESET pool index may be applied for the second CMRs/AP-CSI-RS. For example, if the configured CORESET pool index is 0, the configured CORESET pool index may be 1.

In multi-DCI-based multi-TRPs, two CORESET pool indices may mean two TRPs. If two AP-CSI-RS resource sets are configured, they may mean two CMRs for two TRPs. A CORESET pool index, a CSI-RS resource set, and a TRP may be associated. This association may be configured by explicit signaling or may be determined by implicit association.

The association between CSI-RS resource sets and CORESET pool indices may not be configured/determined/considered.

According to this embodiment, AP-CSI-RSs can be appropriately received in multi-TRPs (Condition #1).

### <Second Embodiment>

This embodiment may be applied when Conditions #1 and #1-B (at least one codepoint of the TCI field is mapped to two TCI states) are met and the trigger state indicated by the triggering DCI is associated with two CSI-RS resource sets (for group-based beam reporting) and the (two) AP-CSI-RSs from the two CSI-RS resource sets (triggered by this triggering DCI) overlap in one or more symbols.

If the (two) AP-CSI-RSs from the two CSI-RS resource sets (triggered by this triggering DCI) do not overlap, the UE may follow the operation of foregoing Condition #1-B.

If the (two) AP-CSI-RSs from the two CSI-RS resource sets (triggered by this triggering DCI) overlap, the following new operation (new rule) may be defined.

If there is any other DL signal with the indicated TCI state in the same symbol as the CSI-RS (the resources of the AP-CSI-RS/AP-CSI-RS), the UE may follow any of the following operations b1 to b3.. The DL signal may be any of the following (may be the same as the DL signal in Condition #1-B described above).
- PDSCH scheduled with an offset equal to or greater than the threshold timeDurationForQCL.
- an AP CSI-RS scheduled with an offset greater than or equal to beamSwitchTiming reported by the UE when the reporting value of beamSwitchTiming is one of the values {14, 28, 48} and enableBeamSwitchTiming is not provided.
- an AP CSI-RS scheduled with an offset greater than or equal to 48 when the reporting value of beamSwitchTiming-r16 is one of the values {224, 336} and enableBeamSwitchTiming is provided.
- P CSI-RS.
- SP CSI-RS.

### [Operation b1]

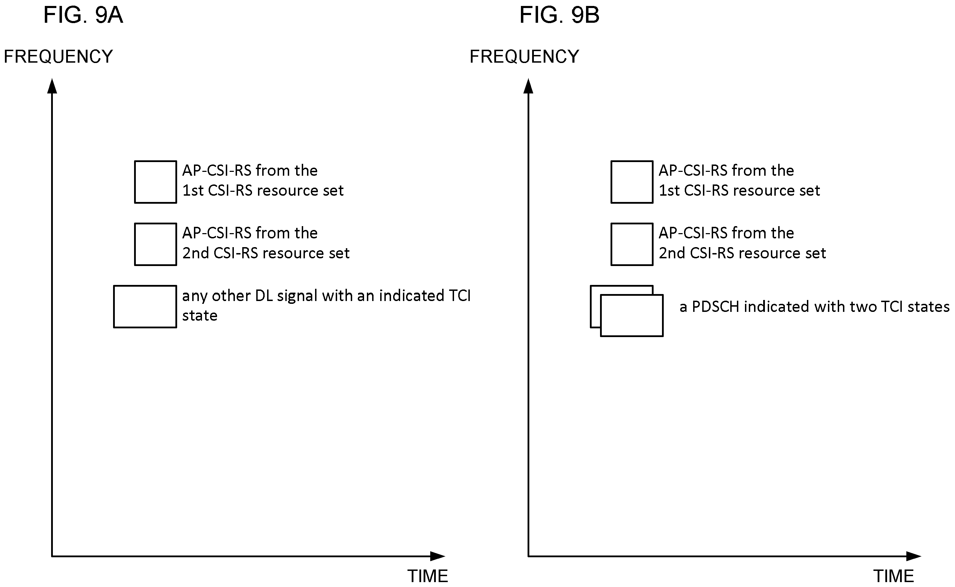

The UE applies the same QCL assumption of the DL signal when receiving the two AP-CSI-RSs (Fig. 9A).

### [Operation b2]

The UE may apply the QCL assumption of the DL signal when receiving the AP-CSI-RS resource of one of the two AP-CSI-RS resources. The UE may apply other QCL assumptions when receiving the other AP-CSI-RS resource of the two AP-CSI-RS resources (Fig. 9B). Details of the operation b2 will be described later.

### [Operation b3]

The UE may apply the two default TCI states configured by the RRC IE (respectively) when receiving the two AP-CSI-RSs.

If there is a PDSCH indicated with two TCI states in the same symbol as the CSI-RS (resources of the AP-CSI-RS/AP-CSI-RS), the UE may apply the two TCI states respectively when receiving the two AP-CSI-RSs. Here, the UE may apply the first TCI state to the AP-CSI-RS associated with the first CSI-RS resource set/TRP and apply the second TCI state to the AP-CSI-RS associated with the second CSI-RS resource set/TRP.

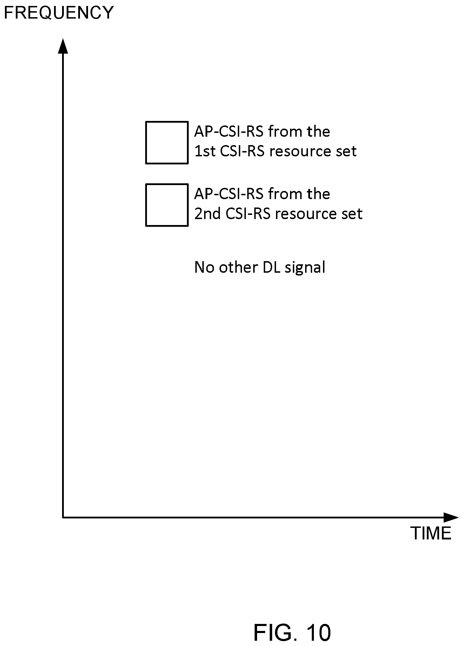

If there is no DL signal, the UE may follow any of the following operations b4 to b5 (Fig. 10).

### [Operation b4]

The UE applies (respectively) the two TCI states corresponding to the lowest TCI codepoint among the TCI codepoints mapped to the two TCI states and applicable to the PDSCH in the active BWPs of the cell in which the CSI-RS (resources of the AP-CSI-RS/AP-CSI-RS) is to be received when receiving the two AP CSI-RSs. Here, the UE may apply the first TCI state to the AP-CSI-RS associated with the first CSI-RS resource set/TRP and apply the second TCI state to the AP-CSI-RS associated with the second CSI-RS resource set/TRP.

### [Operation b5]

The UE may apply the two default TCI states configured by the RRC IE (respectively) when receiving the two AP-CSI-RSs.

In the operation b2, there are the following problems.

### [Problem #A]

The problem is to which of the two AP-CSI-RS resources the UE will apply the QCL assumption of the DL signal. This AP-CSI-RS resource may be the following AP-CSI-RS resource 1 or 2.

### [AP-CSI-RS Resource 1]

This AP-CSI-RS resource is fixed as one AP-CSI-RS resource from the first or second CSI-RS resource set.

### [AP-CSI-RS Resource 2]

This AP-CSI-RS depends on the association of the TRP with the TCI state. For example, if the QCL assumption for the DL signal is associated with one TCI state or one AP-CSI-RS resource in one CSI-RS resource set/TRP, the QCL assumption for the DL signal applies to the AP-CSI-RS resource in the corresponding CSI-RS resource set/TRP.

### [Problem #B]

The problem is what is the other QCL assumption for the reception of the other AP-CSI-RS of the two AP-CSI-RSs. This QCL assumption may be any of the following QCL assumptions 1 to 3.

### [QCL Assumption 1]

This QCL assumption is a QCL assumption of DCI/PDCCH/CORESET of triggering.

### [QCL Assumption 2]

This QCL assumption is one TCI state of the two TCI states corresponding to the lowest TCI codepoint among the TCI codepoints mapped to the two TCI states and applicable to the PDSCH in the active BWPs of the cell in which the CSI-RS (resources of the AP-CSI-RS/AP-CSI-RS) is to be received. This one TCI state may be the following TCI state 1 or 2.

### [[TCI State 1]]

This TCI state is fixed as the first TCI state or the second TCI state of the two TCI states.

### [[TCI State 2]]

This TCI state depends on the association of the TCI state with the TRP. For example, if the other AP-CSI-RS is from the first CSI-RS resource set/TRP, the first TCI state of the two TCI states is applied. For example, if the other AP-CSI-RS is from the second CSI-RS resource set/TRP, the second TCI state of the two TCI states is applied.

### [QCL Assumption 3]

This QCL assumption is one default TCI state of the two default TCI states configured by the RRC IE. This default TCI state may be the following default TCI state 1 or 2.

### [[Default TCI State 1]]

This TCI state is fixed as the first TCI state or the second TCI state of the two TCI states.

### [[Default TCI state 2]]

This TCI state depends on the association of the TCI state with the TRP. For example, if the other AP-CSI-RS is from the first CSI-RS resource set/TRP, the first TCI state of the two TCI states is applied. For example, if the other AP-CSI-RS is from the second CSI-RS resource set/TRP, the second TCI state of the two TCI states is applied.

In a single-DCI-based multi-TRP, if there are two TCI states corresponding to one TCI codepoint, they may mean two TCI states for the two TRPs. If two AP-CSI-RS resource sets are configured, they may mean two CMR sets for two TRPs. A TCI state, a CSI-RS resource set, and a TRP may be associated. This association may be configured by explicit signaling or may be determined by implicit association.

According to this embodiment, the AP-CSI-RS can be appropriately received in the single-DCI-based multi-TRP (Condition #1-B) .

### <Third Embodiment>

This embodiment may be applied when Conditions #1 and #1-A (two different values of the CORESET pool index are configured) are met, and a trigger state indicated by the triggering DCI is associated with two CSI-RS resource sets (for group-based beam reporting), and (two) AP-CSI-RSs from the two CSI-RS resource sets (triggered by this triggering DCI) overlap in one or more symbols.

If the (two) AP-CSI-RSs from the two CSI-RS resource sets (triggered by this triggering DCI) do not overlap, the UE may follow the operation of foregoing Condition #1-A.

If the (two) AP-CSI-RSs from the two CSI-RS resource sets (triggered by this triggering DCI) overlap, the following new operation (new rule) may be defined.

If there is any other DL signal using the indicated TCI state in the same symbol as the CSI-RS (the resources of the AP-CSI-RS/AP-CSI-RS), the UE may follow any of the following operations c1 to c3. The DL signal may be different from the DL signal in Condition #1-A described above. The DL signal (DL signal c) may be any of the following.
- A PDSCH scheduled by a PDCCH associated with one CORESET pool index and scheduled with an offset equal to or greater than the threshold timeDurationForQCL.
- An AP CSI-RS triggered by a PDCCH associated with one CORESET pool index and scheduled with an offset equal to or greater than beamSwitchTiming reported by the UE when the reporting value of beamSwitchTiming is one of the values {14, 28, 48} and enableBeamSwitchTiming is not provided.
- An AP CSI-RS triggered by a PDCCH associated with one CORESET pool index and scheduled with an offset greater than or equal to 48, when the reporting value for beamSwitchTiming-r16 is one of the values {224, 336} and enableBeamSwitchTiming is provided.
- P CSI-RS.
- SP CSI-RS.

### [Operation c1]

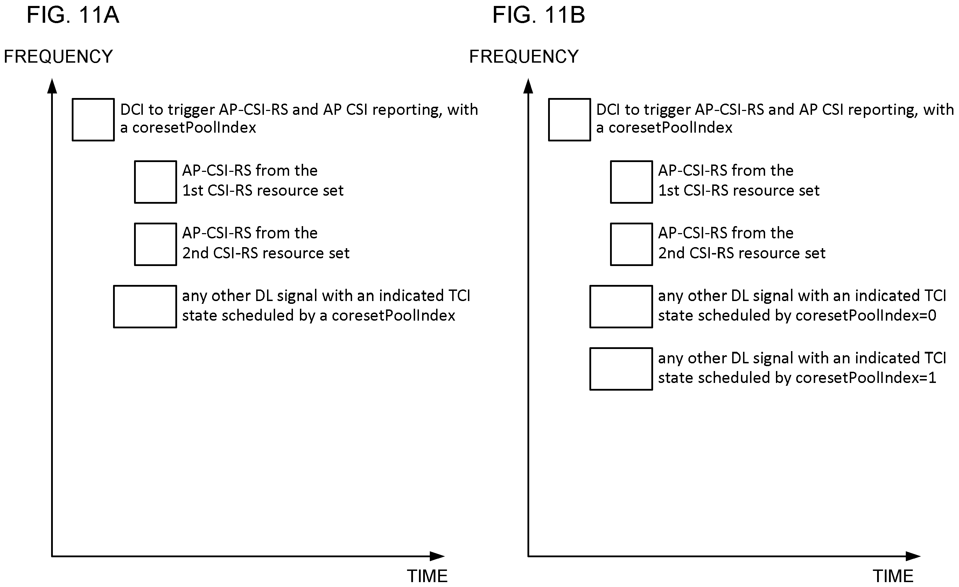

The UE applies the same QCL assumption of the DL signal when receiving the two AP-CSI-RSs (Fig. 11A).

### [Operation c2]

The UE may apply the QCL assumption of the DL signal when receiving the AP-CSI-RS resource of one of the two AP-CSI-RS resources. The UE may apply other QCL assumptions when receiving the other AP-CSI-RS resource of the two AP-CSI-RS resources. Details of the operation c2 will be described later.

### [Operation c3]

The UE may apply the two default TCI states configured by the RRC IE (respectively) when receiving the two AP-CSI-RSs.

If there are any other (two) DL signals with TCI states indicated (scheduled) (two) CORESETs from the two CORESET pool indices in the same symbol as the CSI-RS (resources of the AP-CSI-RS/AP-CSI-RS) (the definition of the DL signal may be the same as that of the DL signal c described above), the UE may follow any of the following operations c4 to c5 (Fig. 11B).

### [Operation c4]

The UE may apply the QCL assumption of the two DL signals respectively when receiving the two AP-CSI-RS resources. Details of the operation b4 will be described later.

### [Operation c5]

The UE may apply the two default TCI states configured by the RRC IE (respectively) when receiving the two AP-CSI-RSs.

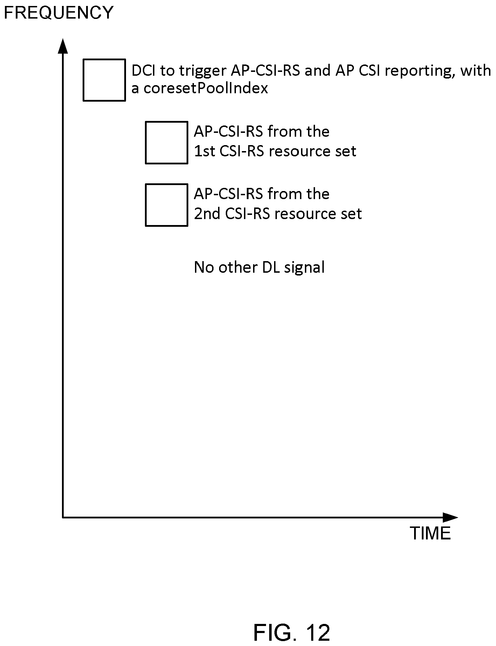

If there is no other DL signal with the indicated TCI state in the same symbol as the CSI-RS (the two AP-CSI-RS/the two AP-CSI-RS resources) (the definition of the DL signal may be the same as that of the DL signal c described above), the UE may follow any of the following operations c6 to c7 (Fig. 12).

### [Operation c6]

The UE may apply the QCL assumptions of the two CORESETs respectively when receiving the two AP-CSI-RSs. Each of the two CORESETs may be a CORESET with the lowest CORESET ID of each CORESET pool index within the most recent slot, which is associated with the monitored search space. Each of the two CORESETs may be a CORESET with the lowest CORESET ID (controlResourceSetId) among the CORESETs configured with the value of the CORESET pool index in the most recent slot associated with the value of the corresponding CORESET pool index, and associated with the monitored search space.

### [Operation c7]

The UE may apply the two default TCI states configured by the RRC IE (respectively) when receiving the two AP-CSI-RSs.

In the operation c2, there are the following problems.

### [Problem #A]

The problem is to which of the two AP-CSI-RS resources the UE will apply the QCL assumption of the DL signal.

### [Problem #B]

The problem is what is the other QCL assumption for the reception of the other AP-CSI-RS of the two AP-CSI-RSs.

If the CORESET pool index of the PDCCH scheduling the DL signal is different from the CORESET pool index of the PDCCH triggering the AP-CSI-RS, the UE may apply the QCL assumption of the DL signal to the AP-CSI-RS from one CSI-RS resource set/TRP. The UE may apply the QCL assumption of the PDCCH triggering the AP-CSI-RS to the AP-CSI-RS from the CSI-RS resource set/TRP corresponding/associated with the other AP-CSI-RS.

If the CORESET pool index of the PDCCH scheduling the DL signal is the same as the CORESET pool index of the PDCCH triggering the AP-CSI-RS, the UE may apply the QCL assumption of the DL signal to the AP-CSI-RS from one CSI-RS resource set/TRP. For example, if the CORESET pool index of the PDCCH scheduling the DL signal is 0, the QCL assumption for the DL signal may be applied to the AP-CSI-RS from the first CSI-RS resource set/TRP. For example, if the CORESET pool index of the PDCCH scheduling the DL signal is 1, the QCL assumption for the DL signal may be applied to the AP-CSI-RS from the second CSI-RS resource set/TRP. The QCL assumption on the AP-CSI-RS resource from the other CSI-RS resource set/TRP may be any of the following QCL assumptions 1 to 3.

### [QCL Assumption 1]

This QCL assumption is the same QCL assumption as the first AP-CSI-RS resource.

### [QCL Assumption 2]

This QCL assumption may be a CORESET with the lowest CORESET ID of the CORESET pool index within the most recent slot for the other CORESET pool index, which is associated with the monitored search space. This QCL assumption may be a CORESET with the lowest CORESET ID (controlResourceSetId) among the CORESETs configured with the value of the CORESET pool index, in the most recent slot associated with the value of the other CORESET pool index, and associated with the monitored search space.

### [QCL Assumption 3]

This QCL assumption is one default TCI state of the two default TCI states configured by the RRC IE. The one default TCI state is associated with the other CORESET pool index.

In the operation c4, there are the following problems.

### [Problem]

The problem is how the other (two) DL signals are mapped to the two AP-CSI-RS resources.

This mapping may depend on the association between the CORESET pool index and the CSI-RS resource set. The QCL assumption of the DL signal scheduled with one CORESET from one CORESET pool index may be applied to the AP-CSI-RS from the associated CSI-RS resource set. For example, if the CORESET pool index = 0 and the first CSI-RS resource set are associated with the same TRP, the QCL assumption of the DL signal scheduled with the CORESET from the CORESET pool index = 0 may be applied to the AP-CSI-RS from the first CSI-RS resource set, or the QCL assumption of the DL signal scheduled with the CORESET from the CORESET pool index = 1 may be applied to the AP-CSI-RS from the second CSI-RS resource set.

In multi-DCI-based multi-TRPs, two CORESET pool indices may mean two TRPs. If two AP-CSI-RS resource sets are configured, they may mean two CMRs for two TRPs. A CORESET pool index, a CSI-RS resource set, and a TRP may be associated. This association may be configured by explicit signaling or may be determined by implicit association.

According to this embodiment, the AP-CSI-RS can be appropriately received in the multi-DCI-based multi-TRP (Condition #1-A) .

### <Other Embodiments>

A higher layer parameter (RRC IE)/UE capability corresponding to a function (feature) in each of the above embodiments may be defined. The higher layer parameter may indicate whether or not the function is enabled. The UE capability may indicate whether the UE supports the function.

The UE in which the higher layer parameter corresponding to the function is configured may perform the function. "The UE in which the higher layer parameter corresponding to the function is not configured does not perform the function (for example, according to Rel. 15/16)" may be defined.

The UE that has reported the UE capability indicating support for the function may perform the function. "The UE that does not report the UE capability indicating support for the function does not perform the function (for example, according to Rel. 15/16)" may be defined.

When the UE reports the UE capability indicating to support the function, and a higher layer parameter corresponding to the function is configured, the UE may perform the function. "When the UE does not report the UE capability indicating to support the function or the higher layer parameter corresponding to the function is not configured, the UE does not perform the function (for example, according to Rel. 15/16)" may be defined.

The UE capability may indicate whether or not to support (two) AP-CSI-RS resources from two CSI-RS resource sets for group-based beam reporting overlapping in one or more symbols.

The UE capability may indicate whether or not to support default QCL assumptions (TCI states) for (two) AP-CSI-RS resources from two CSI-RS resource sets for single-DCI-based/multi-DCI-based multi-TRPs. The UE capability may indicate whether or not to support default QCL assumptions (TCI states) when (two) AP-CSI-RS resources from two CSI-RS resource sets overlap in time for single-DCI-based/multi-DCI-based multi-TRPs.

The UE capability may indicate whether or not to support explicit configuration of two default QCL assumptions (TCI states) for single-DCI-based/multi-DCI-based multi-TRPs.

The UE capability may indicate whether or not to support two CSI-RS resource sets associated with one trigger state being configured for group-based beam measurement/reporting.

The UE capability may indicate whether or not to support at least two associations of a CSI-RS resource set, a TRP, a TCI state, and a CORESET pool index.

According to the above UE capability/higher layer parameters, the UE can realize the above functions while maintaining compatibility with existing specifications.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

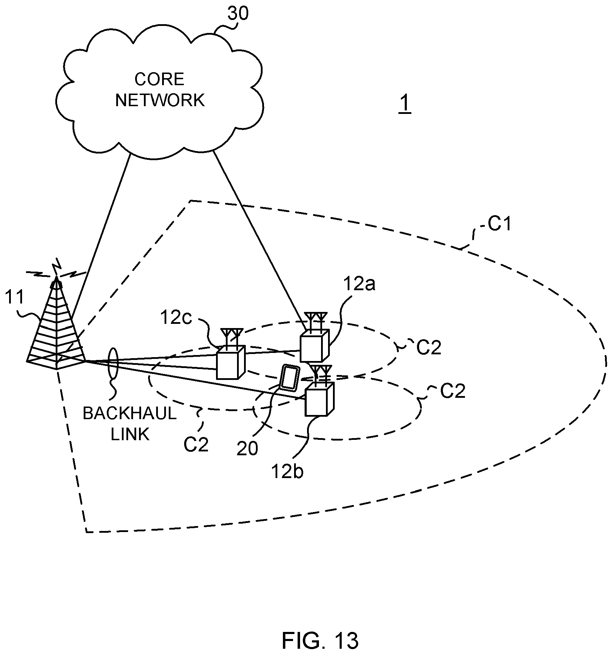

Fig. 13 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

In addition, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

In addition, the user terminal 20 may perform communication in each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication) . For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may be a terminal supporting to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as downlink channels, a downlink shared channel (physical downlink shared channel (PDSCH)) that is shared by respective user terminals 20, a broadcast channel (physical broadcast channel (PBCH)), a downlink control channel (physical downlink control channel (PDCCH)), or the like may be used.

In addition, in the radio communication system 1, as uplink channels, an uplink shared channel (physical uplink shared channel (PUSCH)) that is shared by respective user terminals 20, an uplink control channel (physical uplink control channel (PUCCH)), a random access channel (physical random access channel (PRACH)), or the like may be used.

User data, higher layer control information, a system information block (SIB), and the like are transmitted on the PDSCH. The PUSCH may transmit the user data, higher layer control information, and the like. In addition, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". In addition, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

In addition, in the radio communication system 1, a sounding reference signal (SRS), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

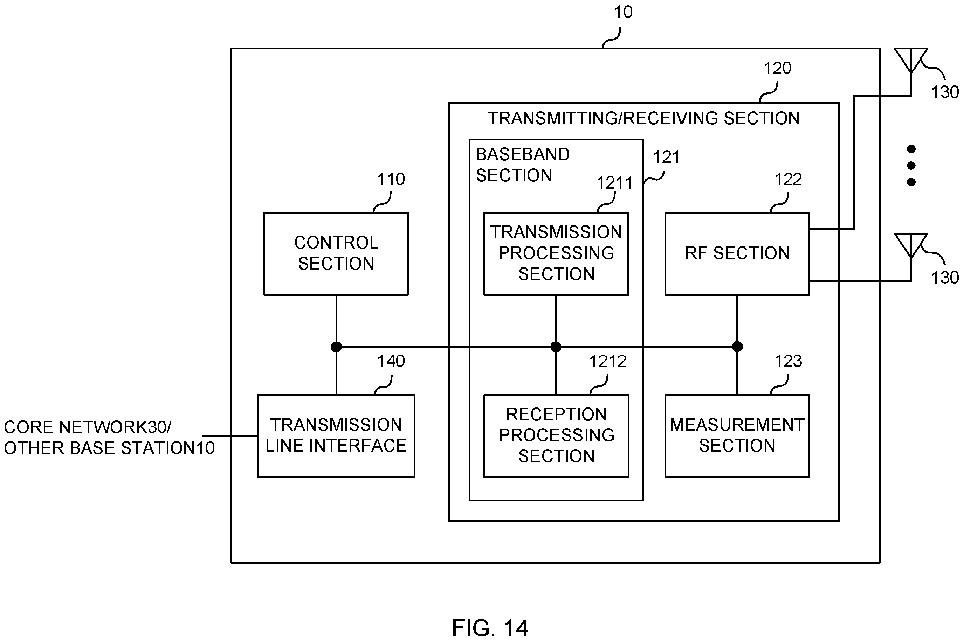

Fig. 14 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes functional blocks of characteristic parts of the present embodiment, and it may be assumed that the base station 10 also includes other functional blocks necessary for radio communication. A part of processing of each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include antennas described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like and may, for example, acquire or transmit user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may transmit downlink control information indicating a trigger state associated with two channel state information (CSI)-reference signal (RS) resource sets. In a case where a time offset between the downlink control information and at least one of the two CSI-RSs based on the trigger state is smaller than a threshold, the control section 110 may determine one or more quasi-co-location (QCL) assumptions to be applied to the two CSI-RSs.

### (User Terminal)

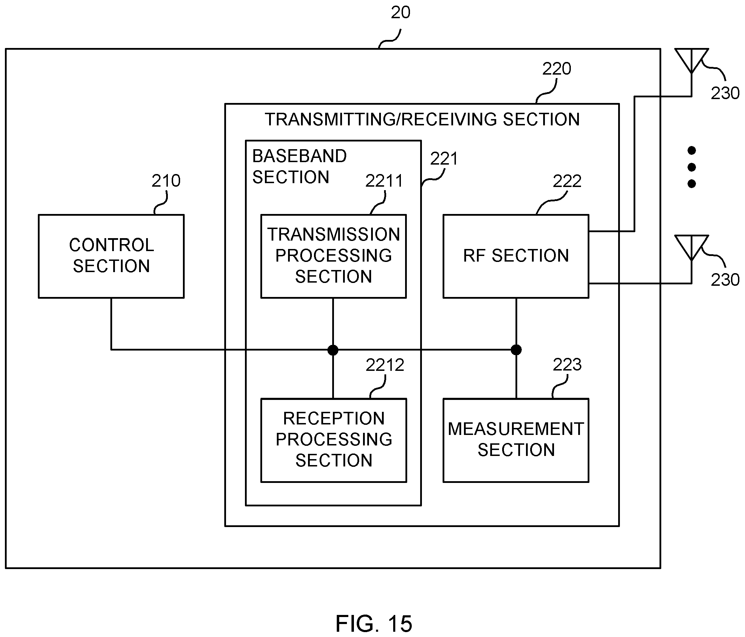

Fig. 15 is a diagram illustrating an example of a configuration of the user terminal according to one embodiment. The user terminal 20 includes a control section 210, a transmitting/receiving section 220, and a transmitting/receiving antenna 230. Note that one or more control sections 210, one or more transmitting/receiving sections 220, and one or more transmitting/receiving antennas 230 may be included.

Note that this example mainly describes functional blocks of characteristic parts of the present embodiment, and it may be assumed that the user terminal 20 also includes other functional blocks necessary for radio communication. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a given channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency band, filtering processing, amplification, and the like on the baseband signal, to transmit a signal in the radio frequency bad via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmitting/receiving antenna 230.

The transmitting/receiving section 220 may receive downlink control information indicating a trigger state associated with two channel state information (CSI)-reference signal (RS) resource sets. In a case where a time offset between the downlink control information and at least one of the two CSI-RSs based on the trigger state is smaller than a threshold, the control section 210 may determine one or more quasi-co-location (QCL) assumptions to be applied to the two CSI-RSs.

In a case where the time offset is smaller than the threshold, the two CSI-RSs overlap in a same symbol, and at least one codepoint in a transmission configuration indication (TCI) field is mapped to two TCI states, the control section 210 may determine the one or more QCL assumptions.

In a case where the time offset is smaller than the threshold, the two CSI-RSs overlap in a same symbol, and two different values of a control resource set pool index are configured, the control section 210 may determine the one or more QCL assumptions.

The two CSI-RSs may not overlap in a same symbol.

### (Hardware Configuration)

Note that the block diagrams that have been used to describe the above embodiments illustrate blocks in functional units. These functional blocks (components) may be implemented in arbitrary combinations of at least one of hardware or software. In addition, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the functions includes, but is not limited to, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

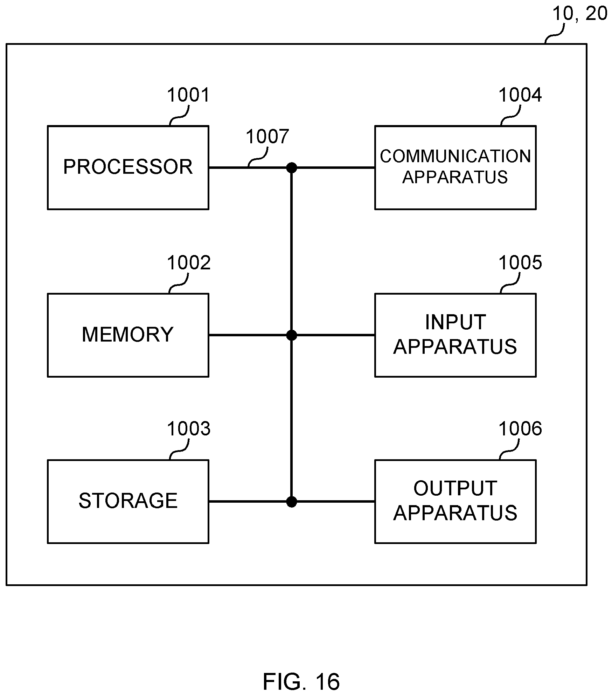

For example, the base station, the user terminal, and the like according to one embodiment of the present disclosure may function as a computer that executes the processing of the radio communication method of the present disclosure. Fig. 16 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, or a unit can be replaced with each other. The hardware configuration of the base station 10 and the user terminal 20 may be configured to include one or more of the apparatuses illustrated in the drawings, or may be configured not to include some apparatuses.

For example, although only one processor 1001 is illustrated, a plurality of processors may be provided. In addition, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, predetermined software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

In addition, the processor 1001 reads programs (program codes), software modules, data, and the like from at least one of the storage 1003 or the communication apparatus 1004 into the memory 1002, and performs various types of processing according to these. As for the programs, programs to allow computers to execute at least part of the operations of the above-described embodiments may be used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmitting/receiving device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

In addition, apparatuses, including the processor 1001, the memory 1002, and the like are connected by the bus 1007 so as to communicate information. The bus 1007 may be formed with a single bus, or may be formed with buses that vary between apparatuses.

In addition, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. In addition, the signal may be a message. A reference signal can be abbreviated as an RS, and may be referred to as a pilot, a pilot signal, and the like, depending on which standard applies. In addition, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). In addition, a slot may be a time unit based on numerology.

The slot may include a plurality of mini slots. Each mini slot may include one or more symbols in the time domain. in addition, the mini slot may be referred to as a subslot. Each mini slot may include fewer symbols than the slot. A PDSCH (or PUSCH) transmitted in a time unit larger than the mini slot may be referred to as PDSCH (PUSCH) mapping type A. A PDSCH (or a PUSCH) transmitted using a mini slot may be referred to as PDSCH (PUSCH) mapping type B.

A radio frame, a subframe, a slot, a mini slot, and a symbol each represent a time unit in signal transmission. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that a unit representing a TTI may be referred to as a slot, a mini slot, or the like instead of a subframe.

Here, a TTI refers to the minimum time unit of scheduling in radio communication, for example. For example, in the LTE system, a base station performs scheduling to assign radio resources (a frequency bandwidth, transmit power, and the like that can be used in each user terminal) to each user terminal in TTI units. Note that the definition of the TTI is not limited thereto.

The TTI may be a transmission time unit of a channel-coded data packet (transport block), a code block, a codeword, and the like or may be a processing unit of scheduling, link adaptation, and the like. Note that when a TTI is given, a time interval (for example, the number of symbols) to which a transport block, a code block, a codeword, or the like is actually mapped may be shorter than the TTI.

Note that, when one slot or one mini slot is referred to as a "TTI," one or more TTIs (that is, one or more slots or one or more mini slots) may be the minimum time unit of scheduling. In addition, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, and the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is a resource allocation unit in the time domain and the frequency domain, and may include one or more of consecutive subcarriers in the frequency domain. The number of subcarriers included in an RB may be the same regardless of the numerology, and may be 12, for example. The number of subcarriers included in an RB may be determined based on a numerology.

In addition, an RB may include one or more symbols in the time domain, and may be one slot, one mini slot, one subframe, or one TTI in length. One TTI, one subframe, and the like may each include one or more resource blocks.

Note that one or more RBs may be referred to as a physical resource block (PRB), a subcarrier group (SCG), a resource element group (REG), a PRB pair, an RB pair, and the like.

In addition, a resource block may include one or more resource elements (REs). For example, one RE may be a radio resource field of one subcarrier and one symbol.

The bandwidth part (BWP) (which may also be referred to as a partial bandwidth or the like) may represent a subset of consecutive common resource blocks (RBs) for given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", and the like in the present disclosure may be replaced with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

In addition, the information, parameters, and the like described in the present disclosure may be represented using absolute values, or may be represented using relative values with respect to given values, or may be represented using other corresponding information. For example, a radio resource may be indicated by a given index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, instructions, commands, information, signals, bits, symbols and chips, all of which may be referenced throughout the above description, may be represented by voltages, currents, electromagnetic waves, magnetic fields or particles, optical fields or photons, or any combination of these.

In addition, information, signals, and the like can be output in at least one of a direction from a higher layer to a lower layer or a direction from a lower layer to a higher layer. Information, signals, and the like may be input and output via a plurality of network nodes.

The information, signals, and the like that are input and/or output may be stored in a specific location (for example, in a memory), or may be managed using a management table. The information, signals, and the like to be input and output can be overwritten, updated, or appended. The output information, signals, and the like may be deleted. The input information, signals, and the like may be transmitted to another apparatus.

Notification of information may be performed not only by using the aspects/embodiments described in the present disclosure but also using other methods. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. In addition, the RRC signaling may be referred to as an RRC message, and may be, for example, an RRC connection setup message, an RRC connection reconfiguration message, and the like. In addition, notification of the MAC signaling may be performed using, for example, an MAC control element (CE).

In addition, notification of given information (for example, notification of "being X") is not limited to explicit notification, and may be performed implicitly (for example, by not giving a notification of the given information or by giving a notification of another information).

Judging may be performed by a one-bit value (0 or 1), may be performed by a Boolean indicated by true or false, or may be performed by comparison of numerical values (for example, comparison with a given value).

Software, regardless of whether it is referred to as software, firmware, middleware, microcode, or hardware description language, or referred to by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

In addition, software, commands, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be referred to as a transmitting apparatus, a receiving apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, deviceto-device (D2D), vehicle-to-everything (V2X), and the like). In this case, the user terminal 20 may have the functions of the above-described base station 10. In addition, terms such as "uplink" and "downlink" may be replaced with words corresponding to terminal-to-terminal communication (for example, "sidelink"). For example, an uplink channel, a downlink channel, and the like may be replaced with a sidelink channel.

Similarly, the user terminal in the present disclosure may be replaced with the base station. In this case, the base station 10 may have the functions of the above-described user terminal 20.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. in addition, the order of processing procedures, sequences, flowcharts, and the like of the aspects/embodiments described in the present disclosure may be reordered as long as there is no inconsistency. For example, the methods described in the present disclosure have presented various step elements using exemplary orders, and are not limited to the presented specific orders.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. In addition, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

All references to the elements using designations such as "first" and "second" as used in the present disclosure do not generally limit the amount or sequence of these elements. These designations can be used in the present disclosure, as a convenient way of distinguishing between two or more elements. Therefore, reference to the first and second elements does not mean that only two elements are adoptable, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

In addition, "determining" may be regarded as "determining" receiving (for example, receiving information), transmitting (for example, transmitting information), inputting, outputting, accessing (for example, accessing data in memory), and the like.

In addition, "determining may be regarded as "determining" resolving, selecting, choosing, establishing, comparing, and the like. In other words, "determining" may be regarded as "determining" some action.

In addition, "determining" may be replaced with "assuming", "expecting", "considering", or the like.

The "maximum transmit power" described in the present disclosure may mean a maximum value of transmit power, a nominal UE maximum transmit power, or a rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the phrase "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Further, the term "or" as used in the present disclosure is intended to be not an exclusive-OR.

In the present disclosure, when articles are added by translation, for example, as a, an, and the in English, the present disclosure may include that nouns that follow these articles are plural.

Although the invention according to the present disclosure has been described in detail above, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Therefore, the description of the present disclosure is provided only for the purpose of explaining examples, and should by no means be construed to limit the invention according to the present disclosure in any way.

The present application is based on Japanese Patent Application No. 2021-134360 filed on August 19, 2021. The contents of this are all incorporated herein.

## Claims

1. A terminal comprising:
a receiving section configured to receive downlink control information indicating a trigger state associated with two channel state information (CSI)-reference signal (RS) resource sets; and
a control section configured to determine one or more quasi-co-location (QCL) assumptions applied to the two CSI-RSs when a time offset between the downlink control information and at least one of the two CSI-RSs based on the trigger state is less than a threshold.

2. The terminal according to claim 1, wherein the control section determines the one or more QCL assumptions when the time offset is less than the threshold, and the two CSI-RSs overlap in a same symbol, and at least one codepoint in a transmission configuration indication (TCI) field is mapped to two TCI states.

3. The terminal according to claim 1 or 2, wherein the control section determines the one or more QCL assumptions when the time offset is less than the threshold, and the two CSI-RSs overlap in a same symbol, and two different values of a control resource set pool index are configured.

4. The terminal according to claim 1, wherein the two CSI-RSs do not overlap in a same symbol.

5. A radio communication method of a terminal, the radio communication method comprising:
a step of receiving downlink control information indicating a trigger state associated with two channel state information (CSI)-reference signal (RS) resource sets; and
a step of determining one or more quasi-co-location (QCL) assumptions applied to the two CSI-RSs when a time offset between the downlink control information and at least one of two CSI-RSs based on the trigger state is less than a threshold.

6. A base station comprising:
a transmitting section configured to transmit downlink control information indicating a trigger state associated with two channel state information (CSI)-reference signal (RS) resource sets; and
a control section configured to determine one or more quasi-co-location (QCL) assumptions applied to the two CSI-RSs when a time offset between the downlink control information and at least one of two CSI-RSs based on the trigger state is less than a threshold.
